# EUROPEAN PATENT APPLICATION

(11) **EP 4 543 014 A1**
(43) Date of publication of application: **23.04.2025**
(21) Application number: 24206918.5
(22) Date of filing: 16.10.2024
(51) Int. Cl.: H04N 21/24, H04N 21/4363, H04L 65/80, H04N 21/442

(54) **TRANSFERRING DATA USING AN ADAPTIVE BIT RATE FROM A PAIR OF AUGMENTED-REALITY GLASSES TO ONE OR MORE DEVICES, AND SYSTEMS AND METHODS OF USE THEREOF**

(30) Priority: 17.10.2023 US 202363591110 P; 14.10.2024 US 202418915215
(71) Applicant: Meta Platforms Technologies, LLC, Menlo Park, CA 94025 (US)
(72) Inventor: Soo, Si Liang Eugene, Menlo Park (US); Tang, Brian Laphun, Menlo Park (US); Wong, Timothy, Menlo Park (US); Solanki, Nainesh, Menlo Park (US); Ramachandran, Akhil, Menlo Park (US); Wolf, Christopher, Menlo Park (US); Banisaba, Glenn, Menlo Park (US)
(74) Representative: Murgitroyd & Company

(57) **Abstract**

A method of transferring data via an adaptive bit rate is described. The method includes, (i) in conjunction with capturing video data at the glasses and in response to receiving a request from the user of the glasses to stream the video data at the first device, receiving data used to assess a data transmission characteristic of the first narrow bandwidth communication channel, (ii) in accordance with a determination that the data transmission characteristic satisfies a first threshold, causing the video data to be sent at a first bitrate, (iii) in conjunction with capturing additional video data at the glasses, receiving new data used to assess a new data transmission characteristic of the first narrow bandwidth communication channel, and (iv) in accordance with a determination that the new data transmission characteristic satisfies a second threshold, causing the additional video data to be sent at a second bitrate.

## Description

### PRIORITY AND RELATED APPLICATIONS

This application claims the benefit of U.S. Provisional Application No. 63/591,110, filed on October 17, 2023, and entitled "Transferring Data Using An Adaptive Bit Rate From A Pair Of Augmented-Reality Glasses To One Or More Devices, And Systems And Methods Of Use Thereof'.

### TECHNICAL FIELD

This relates generally to actively streaming video data at a pair of augmented-reality glasses and transferring the video data using an adaptive bit rate to another device, such that the other device is configured to live stream the video data.

### BACKGROUND

Streaming video data at a pair augmented-reality glasses can be a more seamless experience for a user as they do not need to hold another device in their hand while they are streaming. However, transferring the video data to other devices while capturing the video data presents the issue of quality video and continuity of the data stream.

Techniques for seamless transferring of video data from the pair of augmented-reality glasses to another device for storage or live streaming is required to support live stream applications hosted on the augmented-reality glasses, smart phones, or other communicatively coupled devices.

As such, there is a need to address one or more of the above-identified challenges. A brief summary of solutions to the issues noted above are described below.

### SUMMARY

The present invention provides a method of adjusting a bit rate of data being transferred, an electronic device adapted to carry out the method, and a corresponding non-transitory computer readable storage medium as defined in the appended claims.

In accordance with a first aspect, there is provided a method of adjusting a bit rate of data being transferred, the method comprising:
while a user is wearing glasses communicatively coupled to a first device via a first narrow bandwidth communication channel:
   in conjunction with capturing video data using a camera at the glasses and in response to receiving a request from the user of the glasses to stream the video data at the first device, receiving data used to assess a data transmission characteristic of the first narrow bandwidth communication channel;
   in accordance with a determination that the data transmission characteristic satisfies a first threshold, causing the video data to be sent via the first communication channel at a first bitrate, wherein as the video data is received at the first device, the first device is configured to stream the video data to another device associated with another user;
   in conjunction with capturing additional video data using the camera at the glasses, receiving new data used to assess a new data transmission characteristic of the first narrow bandwidth communication channel; and
   in accordance with a determination that the new data transmission characteristic satisfies a second threshold, causing the additional video data to be sent via the first communication channel at a second bitrate, distinct from the first bitrate.

The data used to assess the data transmission characteristic may be a frame rate of the video data sent via the first communication channel; and
the new data used to assess the new data transmission characteristic may be a frame rate of the additional video data sent via the first communication channel.

The frame rate of the video data sent via the first communication channel may be greater than the frame rate of the additional video data sent via the first communication channel; and the first bitrate may be greater than the second bitrate.

The frame rate of the video data sent via the first communication channel may be less than the frame rate of the additional video data sent via the first communication channel; and the first bitrate may be less than the second bitrate.

Capturing the video data may further comprise capturing audio data using a microphone at the glasses.

The narrow bandwidth communication channel may be a Bluetooth channel.

The data and the new data may comprise at least one of: received signal strength indicator (RSSI) data and latency data associated with the first device.

The first device may be further configured to save the video data to memory at the first device.

The method may further comprise:
while the user is wearing the glasses communicatively coupled to the first device via the first narrow bandwidth communication channel:
in conjunction with capturing other video data using the camera at the glasses, receiving other data used to assess another data transmission characteristic of the first narrow bandwidth communication channel;
in accordance with a determination that the other data transmission characteristic satisfies a third threshold, causing the other video data to be sent via the first communication channel at a third bitrate, distinct from the first bitrate and second bitrate.

The method may further comprise:
while the user is wearing the glasses communicatively coupled to the first device via a first narrow bandwidth communication channel and prior to sending the video data via the first communication channel to the first device, compressing and encoding the video data.

The method may further comprise:
while the user is wearing the glasses communicatively coupled to the first device via the first narrow bandwidth communication channel:
in response to capturing the video data using the camera at the glasses, display the video data at a display of the first device; and
in response to capturing the additional video data using the camera at the glasses, display the additional video at the display of the first device.

The method may further comprise:
while the user is wearing the glasses communicatively coupled to the first device via the first narrow bandwidth communication channel:
in response to receiving a message from the other device associated with the other user, present the message at one of glasses and the first device.

The glasses may be one of augmented-reality glasses with at least one display and smart glasses without a display.

In accordance with a second aspect, there is provided an electronic device comprising:
one or more processors; and
memory comprising instructions that, when executed by the one or more processors, cause the electronic device to:
   while a user is wearing glasses communicatively coupled to the electronic device via a first narrow bandwidth communication channel:
   in conjunction with causing a camera at the glasses to capture video data and in response to receiving a request from the user of the glasses to stream the video data at the electronic device, receive data used to assess a data transmission characteristic of the first narrow bandwidth communication channel;
   in accordance with a determination that the data transmission characteristic satisfies a first threshold, cause the video data to be sent via the first communication channel at a first bitrate, wherein as the video data is received at the electronic device, the electronic device streams the video data to another device associated with another user;
   in conjunction with capturing additional video data using the camera at the glasses, receive new data used to assess a new data transmission characteristic of the first narrow bandwidth communication channel; and
   in accordance with a determination that the new data transmission characteristic satisfies a second threshold, cause the additional video data to be sent via the first communication channel at a second bitrate, distinct from the first bitrate.

The data used to assess the data transmission characteristic may be a frame rate of the video data sent via the first communication channel; and
the new data used to assess the new data transmission characteristic may be a frame rate of the additional video data sent via the first communication channel.

The instructions that, when executed by the one or more processors, may further cause the electronic device to:
while the user is wearing the glasses communicatively coupled to the electronic device via the first narrow bandwidth communication channel:
in conjunction with capturing other video data using the camera at the glasses, receive other data used to assess another data transmission characteristic of the first narrow bandwidth communication channel;
in accordance with a determination that the other data transmission characteristic satisfies a third threshold, cause the other video data to be sent via the first communication channel at a third bitrate, distinct from the first bitrate and second bitrate.

The glasses may be one of augmented-reality glasses with at least one display and smart glasses without a display.

In accordance with a third aspect, there is provided a non-transitory computer readable storage medium comprising instructions that, when executed by one or more processors, cause the one or more processors to:
while a user is wearing glasses communicatively coupled to a first device via a first narrow bandwidth communication channel:
in conjunction with causing a camera at the glasses to capture video data and in response to receiving a request from the user of the glasses to stream the video data at the first device, cause the first device to receive data used to assess a data transmission characteristic of the first narrow bandwidth communication channel;
in accordance with a determination that the data transmission characteristic satisfies a first threshold, cause the video data to be sent via the first communication channel at a first bitrate, wherein as the video data is received at the first device, the first device is configured to stream the video data to another device associated with another user;
in conjunction with capturing additional video data using the camera at the glasses, cause the first device to receive new data used to assess a new data transmission characteristic of the first narrow bandwidth communication channel; and
in accordance with a determination that the new data transmission characteristic satisfies a second threshold, cause the additional video data to be sent via the first communication channel at a second bitrate, distinct from the first bitrate.

The instructions that, when executed by the one or more processors, may further cause the one or more processors to:
while the user is wearing the glasses communicatively coupled to the first device via the first narrow bandwidth communication channel:
in conjunction with capturing other video data using the camera at the glasses, cause the first device to receive other data used to assess another data transmission characteristic of the first narrow bandwidth communication channel;
in accordance with a determination that the other data transmission characteristic satisfies a third threshold, cause the other video data to be sent via the first communication channel at a third bitrate, distinct from the first bitrate and second bitrate.

The glasses may be one of augmented-reality glasses with at least one display and smart glasses without a display.

The methods, systems, and devices described herein allow users wearing augmented-reality glasses to live stream video data captured at the augmented-reality glasses via a smart phone or another device, while ensuring the stream of video data is not interrupted. Utilizing an adaptive bit rate to transfer the video data from the augmented-reality glasses to a smart phone via Bluetooth maintains the continuity of video data streaming for live streaming while addressing the transfer speed variability based on signal strength.

The features and advantages described in the specification are not necessarily all inclusive and, in particular, certain additional features and advantages will be apparent to one of ordinary skill in the art in view of the drawings, specification, and claims. Moreover, it should be noted that the language used in the specification has been principally selected for readability and instructional purposes.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

Having summarized the above example aspects, a brief description of the drawings will now be presented.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Figures 1A-1C illustrate an example of the user capturing video data and streaming it to a first device that is configured to live stream the video data, in accordance with some embodiments.
Figure 2 illustrates an overview of the media functionality included at the head-wearable device, in some embodiments.
Figure 3 illustrates an example method of previewing of video data at the head-wearable device or the first device, in some embodiments.
Figure 4 illustrates an example method of broadcasting live stream video data, in some embodiments.
Figure 5 illustrates an example of how a Bluetooth connection is established between the augmented-reality glasses and other communicatively coupled devices, in some embodiments.
Figures 6A, 6B, 6C-1, and 6C-2 illustrate example artificial-reality systems, in accordance with some embodiments.
Figures 7A-7B illustrate an example wrist-wearable device 700, in accordance with some embodiments.
Figures 8A, 8B-1, 8B-2, and 8C illustrate example head-wearable devices, in accordance with some embodiments.
Figures 9A-9B illustrate an example handheld intermediary processing device, in accordance with some embodiments.

In accordance with common practice, the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DETAILED DESCRIPTION

Numerous details are described herein to provide a thorough understanding of the example embodiments illustrated in the accompanying drawings. However, some embodiments may be practiced without many of the specific details, and the scope of the claims is only limited by those features and aspects specifically recited in the claims. Furthermore, well-known processes, components, and materials have not necessarily been described in exhaustive detail so as to avoid obscuring pertinent aspects of the embodiments described herein.

Embodiments of this disclosure can include or be implemented in conjunction with various types or embodiments of artificial-reality systems. Artificial-reality (AR), as described herein, is any superimposed functionality and or sensory-detectable presentation provided by an artificial-reality system within a user's physical surroundings. Such artificial-realities can include and/or represent virtual reality (VR), augmented reality, mixed artificial-reality (MAR), or some combination and/or variation one of these. For example, a user can perform a swiping in-air hand gesture to cause a song to be skipped by a song-providing API providing playback at, for example, a home speaker. An AR environment, as described herein, includes, but is not limited to, VR environments (including non-immersive, semi-immersive, and fully immersive VR environments); augmented-reality environments (including marker-based augmented-reality environments, markerless augmented-reality environments, location-based augmented-reality environments, and projection-based augmented-reality environments); hybrid reality; and other types of mixed-reality environments.

Artificial-reality content can include completely generated content or generated content combined with captured (e.g., real-world) content. The artificial-reality content can include video, audio, haptic events, or some combination thereof, any of which can be presented in a single channel or in multiple channels (such as stereo video that produces a three-dimensional effect to a viewer). Additionally, in some embodiments, artificial reality can also be associated with applications, products, accessories, services, or some combination thereof, which are used, for example, to create content in an artificial reality and/or are otherwise used in (e.g., to perform activities in) an artificial reality.

As described herein, video data includes video and audio information captured using one or more cameras and microphones at the augmented-reality glasses or other communicatively coupled device such as a smart phone. The term media, video media, or media data includes video data, audio data, etc. and the terms video data, video media, and media data can be used interchangeably. The methods and devices described herein include methods and systems for actively capturing video data at a pair augmented-reality glasses and transferring the video data to a smart phone using an adaptive bit rate while the pair of augmented-reality glasses is still actively capturing video data. As described herein, the smart phone is configured to broadcast the video data live (e.g., live streaming).

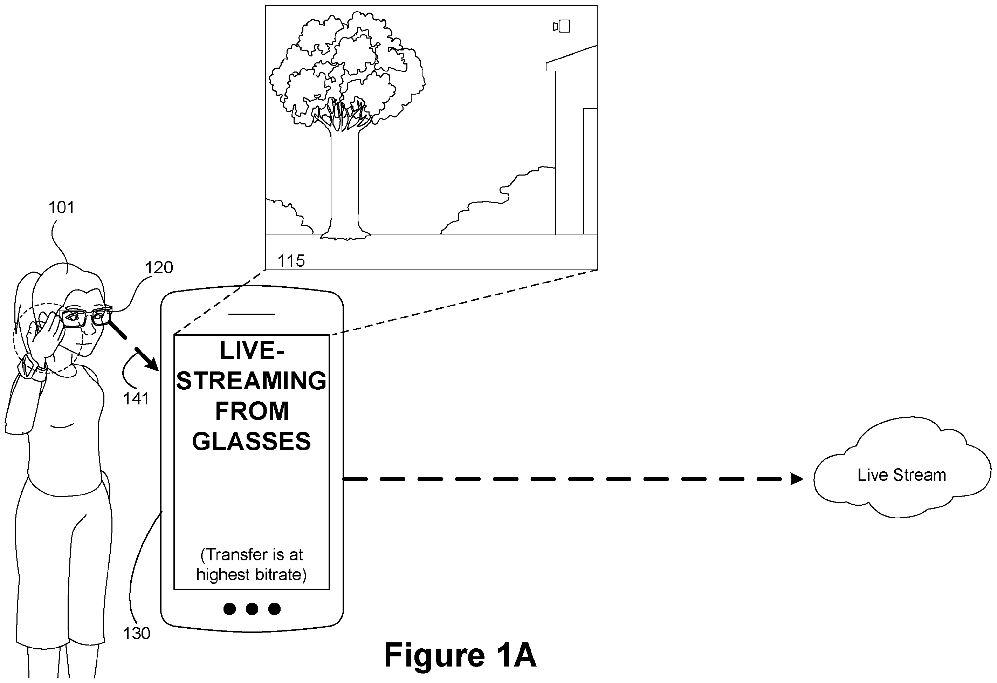

One example of a method of transferring data via an adaptive bit rate, is described below. The example method occurs while a user is wearing glasses (e.g., the head-wearable device 120, as illustrated in Figures 1A-1C) communicatively coupled to a first device (e.g., the communicatively coupled device 130, as illustrated in Figures 1A-1C) via a first narrow bandwidth communication channel (e.g., Bluetooth). The example method includes, in conjunction with capturing video data (e.g., the video data 115, as illustrated in Figures 1A-1C) using a camera at the glasses and in response to receiving a request from the user of the glasses to stream the video data at the first device, receiving data used to assess a data transmission characteristic (e.g., the actual frame rate of the video received at the communicatively coupled device 130, as described in reference to Figures 1A-1C) of the first narrow bandwidth communication channel. The example method further includes, in accordance with a determination that the data transmission characteristic satisfies a first threshold (e.g., the expected frame rate, as described in reference to Figures 1A-1C), causing the video data to be sent via the first communication channel at a first bitrate, wherein as the video data is received at the first device, the first device is configured to stream the video data to another device associated with another user (e.g., another user viewing the streamed video data at their own device). The example method further includes, in conjunction with capturing additional video data using the camera at the glasses (e.g., at a second point in time), receiving new data used to assess a new data transmission characteristic of the first narrow bandwidth communication channel. The example method further includes, in accordance with a determination that the new data transmission characteristic satisfies a second threshold (e.g., a second expected frame rate), causing the additional video data to be sent via the first communication channel at a second bitrate, distinct from the first bitrate.

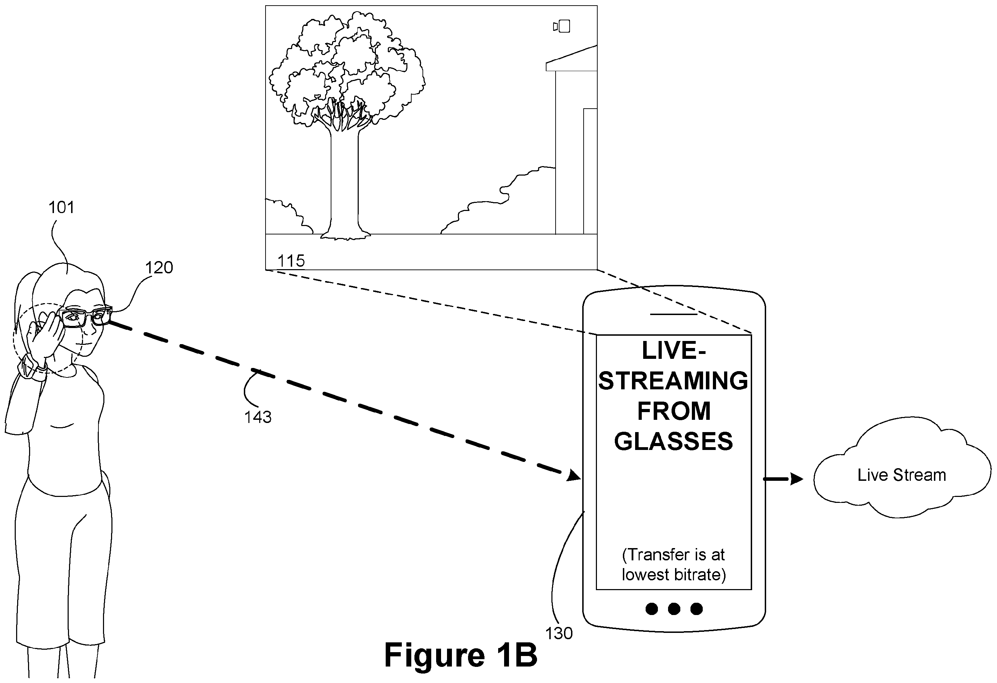

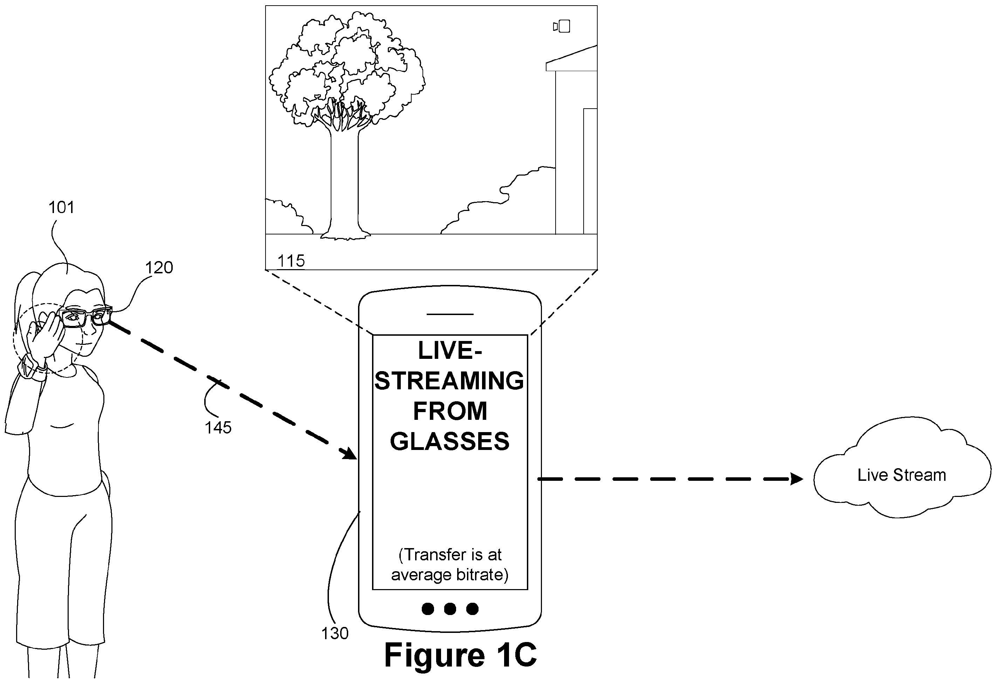

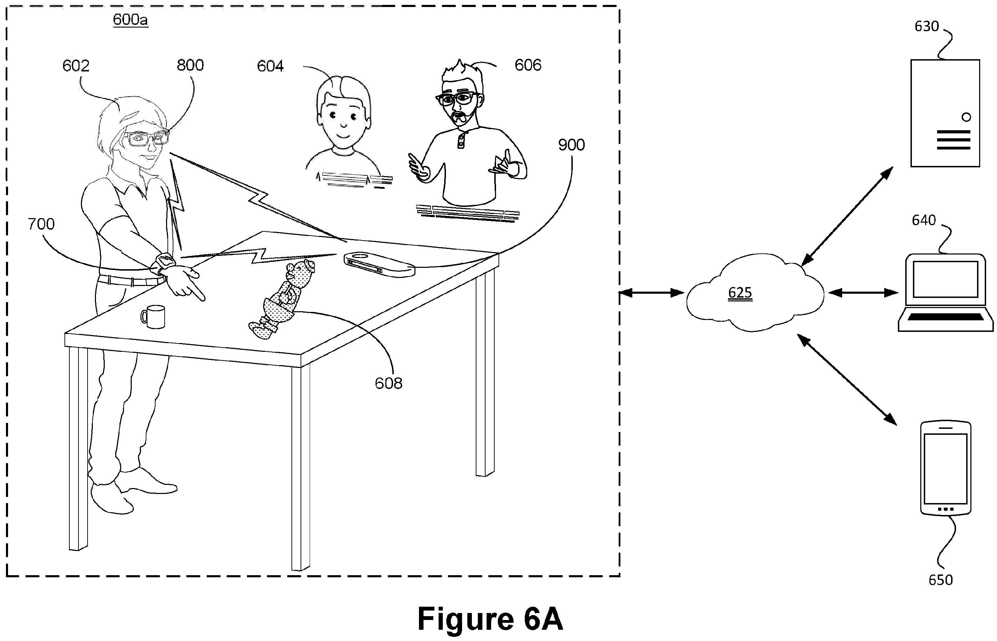

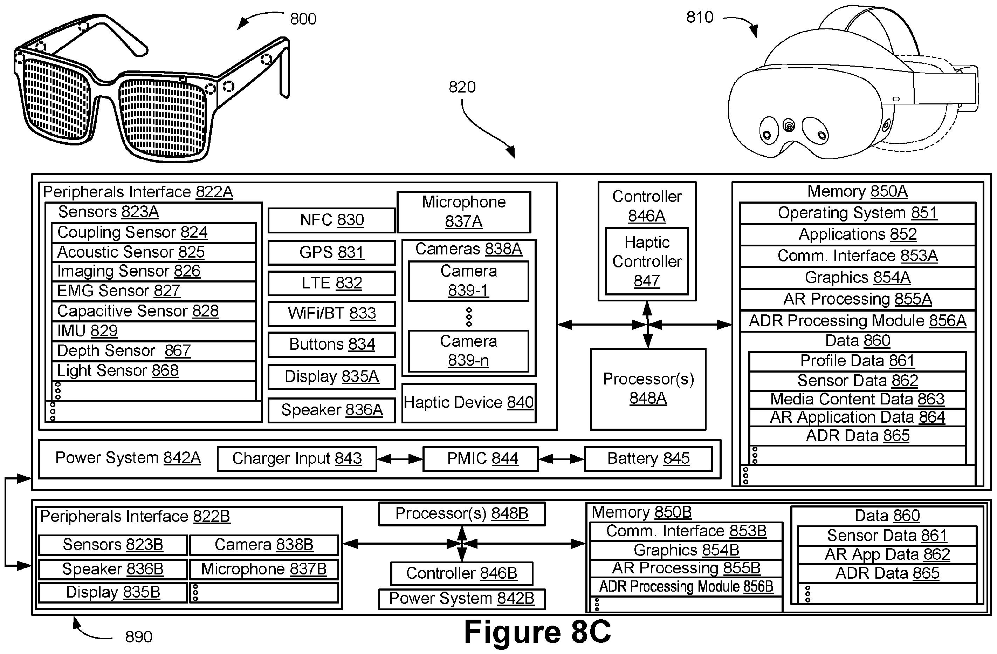

Figures 1A-1C illustrate an example of a user 101 capturing video data 115 at a head-wearable device 120 (e.g., a pair of smart glasses without a display and/or an augmented-reality headset with a monocular display and/or a binocular display) and streaming it to a communicatively coupled device 130 (e.g., a smartphone, a computer, and/or a handheld intermediary processing device) that is configured to live stream the video data 115, in accordance with some embodiments. The communicatively coupled device 130 is communicatively coupled to the head-wearable device 130 via a wireless connection (e.g., via Bluetooth and/or WiFi). For example, Figure 1 shows the head-wearable device 120 capturing image data and audio data (e.g., video data 115). In some embodiments, the image data is captured at a camera of the head-wearable device 120, and the audio data is captured at a microphone of the head-wearable device 120 (e.g., cameras 838A and microphone 837A, described in reference to Figure 8C). In some embodiments, the head-wearable device 120 streams the video data 115 to the communicatively coupled device 130 (e.g., smart phone 650, computer 640, and/or server 630, described in reference to Figure 6A). In some embodiments, the video data 115 may be processed and/or encoded (e.g., compressed) before being streamed to the communicatively coupled device 130. The communicatively coupled device 130 renders the video data 115 for the user to view (e.g., a camera preview, as illustrated in Figures 1A-1C). The communicatively coupled device 130 further transmits the video data 115 to one or more servers for live stream broadcasting, video calling, and/or saving the media to a storage device.

The throughput of the wireless connection between the head-wearable device 120 and the communicatively coupled device 130 may be volatile. Environmental factors, such as a distance between the head-wearable device 120 and the communicatively coupled device 130, physical barriers between the head-wearable device 120 and the communicatively coupled device 130, other connected devices in use, 2.4 GHz WiFi signals, microwave use, and/or other factors can reduce an effective available throughput of the wireless connection. In some embodiments, the head-wearable device 120 adjusts a bitrate of the video data 115 sent from the head-wearable device 120 to the communicatively coupled device 130 by comparing an actual number of frames of the video data 115 received at the communicatively coupled device 130 to an expected number of frames over a predetermined period of time. A difference between the actual number of frames and the expected number of frames informs a direction and a magnitude that the bitrate can be adjusted. For example, if an expected frame rate is 30 frames-per-second (FPS), and an actual frame rate is 15 FPS, then the bitrate will be decreased since this comparison suggests that a current Bluetooth connection capacity is not sufficient for a current bitrate requirement. Conversely, if the actual frame rate matches or exceeds the expected frame rate, then the bitrate will be increased since this suggests that the current Bluetooth connection capacity is sufficient for the current bitrate requirement, and potentially supports a higher bitrate. In some embodiments, the comparison between the actual number of frames of the video data 115 received at the communicatively coupled device 130 to the expected number of frames over the predetermined period of time is performed at the communicatively coupled device 130, and the communicatively coupled device 130 transmits an instruction to the head-wearable device 120 to adjust the bitrate based on the comparison.

Figure 1A illustrates the user 101 streaming the video data 115 from the head-wearable device 120 to the communicatively coupled device 130, while the head-wearable device 120 and the communicatively coupled device 130 are at a first distance 141 from one another. As a result, the actual frame rate exceeds the expected frame rate, and the communicatively coupled device 130 sends an instruction to the head-wearable device 120 to increase the bitrate to a high bitrate, as indicated by the communicatively coupled device. Figure 1B illustrates the user 101 streaming the video data 115 from the head-wearable device 120 to the communicatively coupled device 130, while the head-wearable device 120 and the communicatively coupled device 130 are at a second distance 143, longer than the first distance 141, from one another. As a result, the expected frame exceeds the actual frame rate, and the communicatively coupled device 130 sends an instruction to the head-wearable device 120 to decrease the bitrate to a low bitrate, as indicated by the communicatively coupled device. Figure 1C illustrates the user 101 streaming the video data 115 from the head-wearable device 120 to the communicatively coupled device 130, while the head-wearable device 120 and the communicatively coupled device 130 are at a third distance 145, longer than the first distance 141 and shorter than the second distance 143, from one another. As a result, the actual frame rate matches the expected frame rate, and the communicatively coupled device 130 sends an instruction to the head-wearable device 120 to increase the bitrate to an average bitrate, as indicated by the communicatively coupled device.

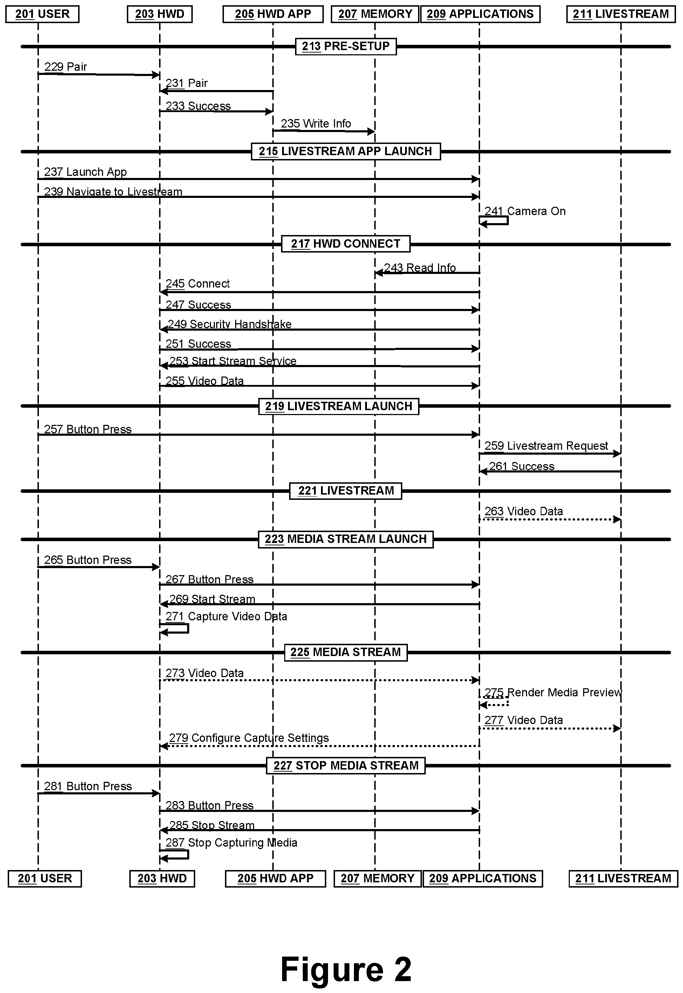

Figure 2 illustrates an overview of the media functionality included at the head-wearable device 120, in some embodiments. For example, the head-wearable device 120 executes a first media streaming application which manages the media stream functionality at the head-wearable device 120, the communicatively coupled device 130, and/or one or more live streaming servers. The first media streaming application includes one or more features such as: coordinating media capture from other head-wearable device services (e.g., start/stop video and audio capture), receiving user inputs at the head-wearable device 120, playing media stream-related and text-to-speech (TTS) messages to the user 101, monitoring and reacting to device health, and communicating with applications at the communicatively coupled device. For example, receiving a user input (e.g., a capture button of the head-wearable device 120 is actuated) includes causing the head-wearable device and/or the communicatively coupled device 130 to send a phone message. An example of playing the media stream-related and the TTS messages to the user 101 includes an audio cue in accordance with a determination that a live stream viewer sends a reaction (e.g., a like/heart) to the broadcast and a TTS message when the user 101 enables the camera at the head-wearable device (e.g., the system providing an audio cue to the user 101 that says "you are now live from the glasses"). An example of monitoring and reacting to device health includes a TTS message indicating "your glasses are getting too hot" when a temperature of the head-wearable device 120 reach a maximum thermal threshold, sending a message to the user 101 via the communicatively coupled device 130 describing a battery level of the head-wearable device 120, and stopping a livestream when the temperature of the head-wearable device 120 reach a maximum thermal threshold (e.g., a predetermined temperature range, etc.). An example of communicating with applications at the communicatively coupled device 130 includes responding to requests from the communicatively coupled device 130 to start and/or stop presenting media, to change video capture settings (e.g., image resolution and/or video bitrate), play audio cues and TTS messages. Further examples of communicating with applications at the communicatively coupled device 130 include sending battery/thermal updates regarding the head-wearable device 120 to the communicatively coupled device 130 and sending button press events at the head-wearable device to the communicatively coupled device 130.

In some embodiments, when the camera coupled to the head-wearable device is recording video data 115 there is a warping effect (e.g., a fisheye effect) of the image data of the video data 115. The warping effect is mitigated real-time at the head-wearable device 120 via software and/or a hardware-accelerated solution. Additionally, the video data 115 captured by the head-wearable device 120 can naturally contain a high level of shaking movement due to the nature of it being a head-mounted device. This can make the video data 115 unappealing to watch as this shaking can be nauseating or not aesthetically pleasing. The shaking movement is mitigated real-time at the head-wearable device 120 via other software and/or another hardware-accelerated solution. In some embodiments, the other software operates by buffering a plurality of frames and analyzing object movement across the plurality of frames and cropping each frame of the plurality of frames to reduce the shaking movement. Analyzing the object movement across the plurality of frames is based, at least in part, on data received from an inertial measurement unit (IMU) sensor (e.g., IMU 829; Figure 8C) of the head-wearable device 120, including acceleration data, orientation data, angular rate data, and gravitational data.

The head-wearable device 120 encodes the video data 115 before transmitting to the communicatively coupled device 130 (e.g., compressing the video data 115 to a data packet with a smaller size than the video data 115). In some embodiments, encoding parameters are configurable by the communicatively coupled device 130 and/or the head-wearable device. The encoding parameters may be changed to support formats that the communicatively coupled device 130 may desire and/or require. In some embodiments, the live stream configuration utilizes HEVC (H.265) for encoding video data and AAC for encoding audio data, to reduce battery consumption. For example, if a battery level of the head-wearable device 120 is low, then a less power-consuming encoding configuration may be used to reduce the battery consumption.

Additionally, the encoding parameters may be changed to optimize utilization of a communication channel between the head-wearable device 120 and the communicatively coupled device 130, in accordance with some embodiments. The capacity of the communication channel between the head-wearable device 120 and the communicatively coupled device 130 may continuously change. A bitrate of the video data 115 below an actual capacity of the communication channel results in suboptimal image quality, while a bitrate of the video data 115 above the actual capacity of the communication channel results in high preview latency and/or broadcast latency. Matching a bitrate of the video data to the actual capacity of the communication channel is desirable and described more below in reference to an adaptive bitrate.

In some embodiments, the communicatively coupled device 130 executes a second media streaming application and a first application (e.g., a social media application). In some embodiments, the second media streaming application receives and/or sends the video data 115 and/or other streaming-related data from the head-wearable device 120 and/or allows the first application to interact with the head-wearable device 120 for media streaming purposes. For example, the second media streaming application connects the first application to the head-wearable device, starts and/or stops a media stream, configures the media stream, sends the audio cues and the TTS requests to the head-wearable device 120 to present to the user, receives general updates from the head-wearable device 120 (e.g., notifications regarding the battery level of the head-wearable device 120 and/or thermal qualities of the head-wearable device 120).

In some embodiments, the second media streaming application is compatible with any application supported at the head-wearable device 120 and the communicatively coupled device 130. In some embodiments, the communicatively coupled device 130 integrates the second media streaming application with live streaming features of the first application.

Figure 2 illustrates a first sequence 213 of interactions between a user 201 (e.g., the user 101), a head-wearable device 203 (e.g., the head-wearable device 120), and a communicatively coupled device (e.g., the communicatively coupled device 130, such as a smartphone), in accordance with some embodiments. The first sequence 213 includes the user 201 performing a pairing button press 229 (e.g., a long button press) at a button of the head-wearable device 203 and/or the user 201 performing a pairing command at the communicatively coupled device. In response to the user 201 performing the pairing button press and/or the pairing command, an application 205, associated with the head-wearable device 203 and being executed at the communicatively coupled device, pairs 231 with the head-wearable device 203. In response to the application 205 pairing with the head-wearable device 203, the head-wearable device 203 sends a pairing confirmation 233 to the application 205. In response to receiving the pairing confirmation at the application 205, the application 205 writes first information 235 related to the head-wearable device 203 to shared memory 207 of the communicatively coupled device.

Figure 2 also illustrates a second sequence 215 of interactions between the user 201, the head-wearable device 203, and the communicatively coupled device, in accordance with some embodiments. The second sequence 215 includes the user 201 performing a launch command 237 at the communicatively coupled device (e.g., by selecting an icon at a display of the communicatively coupled device) to launch a livestream application (e.g., a social media application and/or a video call application) of a plurality of applications 209 stored at the communicatively coupled device. The user 201 also performs a navigation command 239 at the communicatively coupled device to cause the livestream application to begin a livestream at the communicatively coupled device. In response to the livestream application receiving an indication that the navigation command 239, the livestream application begins capturing first image data at a camera of the communicatively coupled device (and/or capturing first audio data at a microphone of the communicatively coupled device).

Figure 2 also illustrates a third sequence 217 of interactions between the user 201, the head-wearable device 203, and the communicatively coupled device, in accordance with some embodiments. The third sequence 217 includes the livestream application of the plurality of applications 209 reads second information 243 (e.g., the first information 235) from the shared memory 207. In response to the livestream application reading the second information 243, the livestream application sends a connection request 245 to the head-wearable device 203. In response to the head-wearable device 203 receiving the connection request 245, the head-wearable device 203 sends a connection confirmation 247 to the livestream application. In response to the livestream application receiving the connection confirmation 247, the livestream application sends a security handshake 249 to the head-wearable device 203. In response to the head-wearable device 203 receiving the security handshake 249, the head-wearable device 203 sends a handshake confirmation 251 to the livestream application. In response to the livestream application receiving the handshake confirmation 251, the livestream application sends a stream request 253 to the head-wearable device 203. In response to the head-wearable device 203 receiving the stream request 253, the head-wearable device 203 streams first video data 255 (e.g., second image data captured at a camera of the head-wearable device 203 and/or second audio data captured at a microphone of the head-wearable device 203) to the livestreaming application.

Figure 2 also illustrates a fourth sequence 219 of interactions between the user 201, the head-wearable device 203, and the communicatively coupled device, in accordance with some embodiments. The fourth sequence 219 includes the user 201 performing a livestream command 257 at the communicatively coupled device (e.g., by selecting another icon at the display of the communicatively coupled device) and sending an indication that the user 201 performed the livestream command 257 to the livestream application of the plurality of applications 209. In response to the livestream application receiving the indication that the user performed the livestream command 257, the livestream application sends a livestream request 259 to another device 211 associated with the livestream application (e.g., a server used for livestreaming services and/or a device associated with another user in a video call). In response to the other device 211 receiving the livestream request 259, the other device 211 sends a livestream confirmation 261 to the livestream application.

Figure 2 also illustrates a fifth sequence 221 of interactions between the user 201, the head-wearable device 203, and the communicatively coupled device, in accordance with some embodiments. The fifth sequence 221 includes the livestream application of the plurality of applications 209 sending second video data 263 (e.g., the first video data 255) to the other device 211. In some embodiments, the other device 211 sends the second video data 263 to a plurality of other devices.

Figure 2 also illustrates a sixth sequence 223 of interactions between the user 201, the head-wearable device 203, and the communicatively coupled device, in accordance with some embodiments. The sixth sequence 223 includes the user 201 performing a stream command 265 at the head-wearable device 203 (e.g., by pressing the button of the head-wearable device 203). In response to the head-wearable device 203 detecting the stream command 265, the head-wearable device 203 sends a stream command indication 267 to the livestream application of the plurality of applications 209. In response to the livestream application receiving the stream command indication 267, the livestream application sends a second stream request 269 (e.g., the stream request 253) to the head-wearable device 203. In response to the head-wearable device 203 receiving the second stream request 269, the head-wearable device 203 begins to capture third video data 271 at the camera of the head-wearable device 203 and/or the microphone of the head-wearable device 203.

Figure 2 also illustrates a seventh sequence 225 of interactions between the user 201, the head-wearable device 203, and the communicatively coupled device, in accordance with some embodiments. The seventh sequence 225 includes the head-wearable device 203 sending fourth video data 273 (e.g., the third video data 271) to the livestream application of the plurality of applications 209. In response to the livestream application receiving the fourth video data 273, the livestream application renders a video preview 275 based on the fourth video data 273. In some embodiments, the video preview 275 is presented at the head-wearable device 203 and/or the communicatively coupled device. In response to the livestream application receiving the fourth video data 273, the livestream application also sends fifth video data 277 (e.g., the fourth video data 273) to the other device 211. In some embodiments, the livestream application further sends video capture configuration settings 279 to the head-wearable device 203.

Figure 2 also illustrates an eighth sequence 227 of interactions between the user 201, the head-wearable device 203, and the communicatively coupled device, in accordance with some embodiments. The eighth sequence 227 includes the user 201 performing a termination command 281 at the head-wearable device 203 (e.g., by pressing the button of the head-wearable device 203). In response to the head-wearable device 203 detecting the termination command 281, the head-wearable device 203 sends a termination command indication 283 to the livestream application of the plurality of applications 209. In response to the livestream application receiving the termination command indication 283, the livestream application sends a termination request 285 to the head-wearable device 203. In response to the head-wearable device 203 receiving the termination request 285, the head-wearable device 203 ceases capturing sixth video data 287 (e.g., the first video data 255, the second video data 263, the third video data 271, the fourth video data 273, and/or the fifth video data 277).

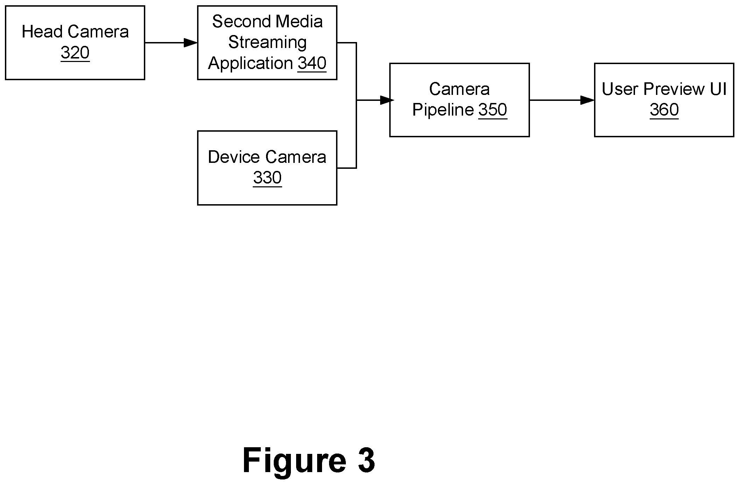

Figure 3 illustrates an example method of previewing of video data at the head-wearable device 120 and/or the communicatively coupled device 130, in accordance with some embodiments. In some embodiments, first video data captured at a head camera 320 the head-wearable device 120 is rendered by at the communicatively coupled device 130 to allow the user 101 to preview the first video data. A device camera 330 of the communicatively coupled device 130 sends second video data captured at the device camera 330 through a camera pipeline 350 of the communicatively coupled device 130. A second media streaming application 340 executed at the communicatively coupled device 130 decodes the first image data received from head-wearable device 120 and sends the first image data to the camera pipeline 350. The camera pipeline 350 routes the first video data and/or the second video data and renders frames of the first video data and/or the second video data to be presented at a user preview user interface (Ul) 360.

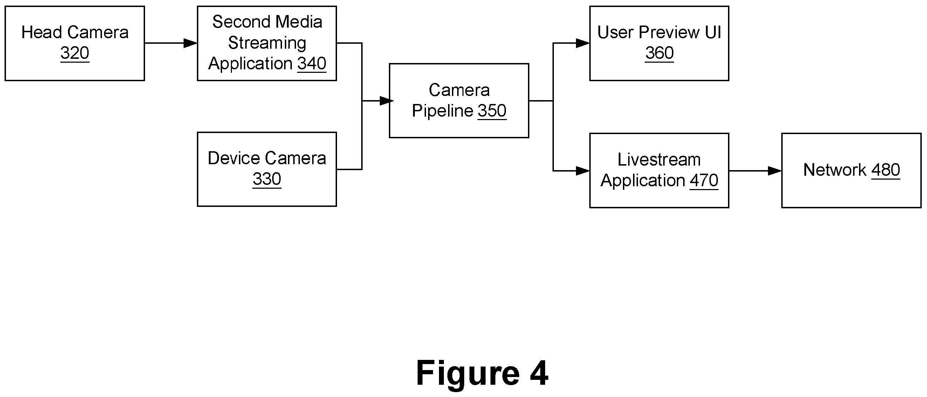

Figure 4 illustrates an example method of livestreaming video data, in accordance with some embodiments. In some embodiments, a livestream application 470 (e.g., a social media application), executed at the communicatively coupled device 130, receives the first video data and/or the second video data via the camera pipeline 350. The livestream application 470 re-encodes the first video data and/or the second video data to be transmitted over a network 480 (e.g., the Internet). In some embodiments, the first video data and/or the second video is transmitted over the network 480 to a plurality of other devices associated with a plurality of other users. During a livestream broadcast, the plurality of other users engage with the user 101 by sending responses (e.g., reactions, comments, likes, etc.) via other livestream applications (e.g., the livestream application 470 executed at the plurality of other devices). The responses are transmitted, via the other livestream applications, over the network 480, to the livestreaming application 470 executed at the communicatively coupled device 130. The livestream application 470 sends the responses to the head-wearable device 120 and/or the communicatively coupled device 130. The head-wearable device 120 and/or the communicatively coupled device 130 present the responses to the user in the form of audio cues and/or TTS readouts via a speaker of the head-wearable device 120 and/or communicatively coupled device 130. In some embodiments, the communicatively coupled device 130 performs the example method of previewing of video data at the head-wearable device 120 and/or the communicatively coupled device 130 described in refence to Figure 3 and the example method of livestreaming video data described in reference to Figure 4 concurrently.

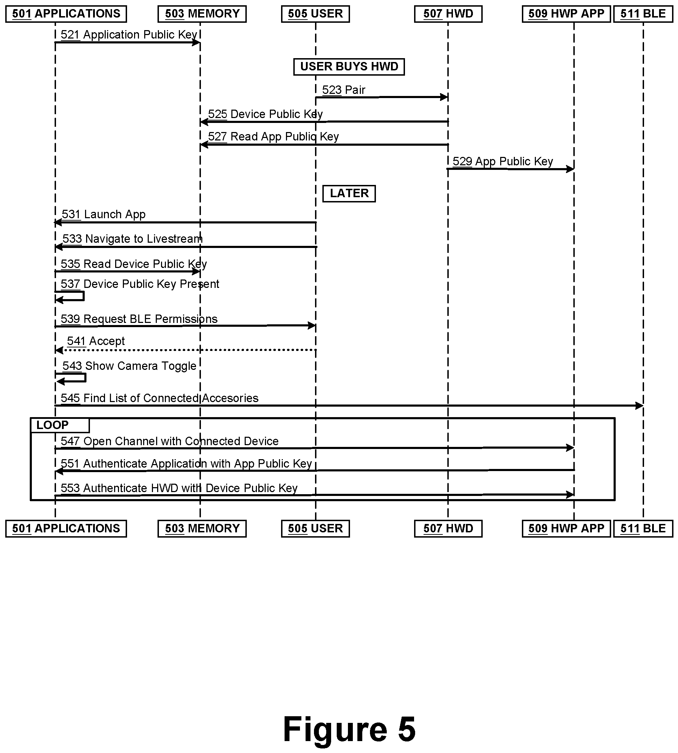

Figure 5 illustrates an example sequence of a establishing a wireless connection (e.g., a Bluetooth connection) established between a head-wearable device 507 (e.g., the head-wearable device 120) and another device (e.g., the example method of livestreaming video data), in accordance with some embodiments. The example sequence includes a livestream application (e.g., the second media streaming application) of a plurality of applications 501 at the other device writing an application public key 521 to a shared memory 503 of the other device. After a user 505 (e.g., the user 101) obtains the head-wearable device 507, the user 505 performs a pairing command 523 at the head-wearable device 507 (e.g., a long button press at a button of the head-wearable device 507). In response to the head-wearable device 507 detecting the pairing command 523, the head-wearable device 507 sends a device public key 525 to the other device, and the device public key is written to the shared memory 503. In response to the head-wearable device 507 detecting the pairing command, the head-wearable device 507 reads the application public key 527 (e.g., the application public key 521) from the shared memory 503. In response to the head-wearable device 507 reading the application public key 527, the head-wearable device 507 sends the application public key 529 (e.g., the application key 521) to the device streaming application 509 (e.g., the first media streaming application). At a later time, the user 505 performs a launch command 531 at livestream application the other device (e.g., a touch input at a display of the other device). The user 505 also performs a navigation command 533 (e.g., a request to begin a livestream and/or a request to initiate a video call) at the livestream application (e.g., another touch command input at the display of the other device). In response to the livestream application receiving an indication that the navigation command 533 was performed, the livestream application reads the device public key 535 (e.g., the device public key 525) from the shared memory 503. In response to the livestream application reading the device public key 535, the livestream application presents an indication that the device public key is present at the other device. In response to the livestream application reading the device public key 535, the livestream application also sends a Bluetooth permissions request 539 to the user 505 (e.g., a dialog presented at the display of the other device). In response to receiving an approval 541 to the Bluetooth permissions request 539 from the user 505, the livestream application presents a camera toggle 543 (e.g., displaying a camera toggle option at the display of the other device). In some embodiments, the camera toggle 543 allows the user 505 to switch between capturing video data at the head-wearable device 507 and the other device. In response to receiving the approval 541 to the Bluetooth permissions request 539 from the user 505, the livestream application also receives a list of connected accessories 545 comprising one or more devices communicatively coupled to the other device via a Bluetooth module of the other device. In some embodiments, the head-wearable device 507 is one of the one or more devices communicatively coupled to the other device via the Bluetooth module of the other device. In response to the user 505 selecting the head-wearable device 507 from the list of connected accessories 545, the livestream application opens a communication channel 547 with the device streaming application 509. In response to the livestream application opening the communication channel 547 with the device streaming application 509, the device streaming application 509 authenticates the livestream application with the application public key 551 (e.g., the application public key 521). In response to the device streaming application 509 authenticating the livestream application with the application public key 551, the livestream application authenticates the head-wearable device 509 with the device public key 553 (e.g., the device public key 525).

The example embodiments below describe a method of transferring video data that is recorded at the head-wearable device and transferred to a first device using an adaptive bit rate. The method can be performed by one or more processors (e.g., central processing unit and/or MCU) of a system including one or more communicatively coupled devices such as a head-wearable device 120 and a smartphone. At least some of the operations discussed below correspond to instructions stored in a computer memory or computer-readable storage medium (e.g., storage, RAM, and/or memory) of a head-wearable 120 and/or a first device. Operations of the methods can be performed by a single device alone or in conjunction with one or more processors and/or hardware components of another communicatively coupled device (e.g., head-wearable device 120, first device, etc.) and/or instructions stored in memory or computer-readable medium of the other device communicatively coupled to the system. In some embodiments, the various operations of the methods described herein are interchangeable and/or optional, and respective operations of the methods are performed by any of the aforementioned devices, systems, or combination of devices and/or systems. For convenience, the method operations will be described below as being performed by particular component or device but should not be construed as limiting the performance of the operation to the particular device in all embodiments.

(A1) An example of a method of transferring data via an adaptive bit rate, is described below. The method occurs while a user is wearing glasses (e.g., the head-wearable device 120, as illustrated in Figures 1A-1C) communicatively coupled to a first device (e.g., the communicatively coupled device 130, as illustrated in Figures 1A-1C) via a first narrow bandwidth communication channel (e.g., Bluetooth). The method includes, in conjunction with capturing video data (e.g., the video data 115, as illustrated in Figures 1A-1C) using a camera at the glasses and in response to receiving a request from the user of the glasses to stream the video data at the first device, receiving data used to assess a data transmission characteristic (e.g., the actual frame rate of the video received at the communicatively coupled device 130, as described in reference to Figures 1A-1C) of the first narrow bandwidth communication channel. The method further includes, in accordance with a determination that the data transmission characteristic satisfies a first threshold (e.g., the expected frame rate, as described in reference to Figures 1A-1C), causing the video data to be sent via the first communication channel at a first bitrate, wherein as the video data is received at the first device, the first device is configured to stream the video data to another device associated with another user (e.g., another user viewing the streamed video data at their own device). The method further includes, in conjunction with capturing additional video data using the camera at the glasses (e.g., at a second point in time), receiving new data used to assess a new data transmission characteristic of the first narrow bandwidth communication channel. The method further includes, in accordance with a determination that the new data transmission characteristic satisfies a second threshold (e.g., a second expected frame rate), causing the additional video data to be sent via the first communication channel at a second bitrate, distinct from the first bitrate. In some embodiments, the bit rate is changed based on characteristics such as RSSI and latency data which affect the quality of the video being transmitted. For example, as described in reference to Figure 5, matching the number of frames is essential to prevent grainy and/or lagging video data.

(A2) In some embodiments of A1, the data used to assess the data transmission characteristic is a frame rate of the video data sent via the first communication channel, and the new data used to assess the new data transmission characteristic is a frame rate of the additional video data sent via the first communication channel.

(A3) In some embodiments of A1-A2, the frame rate of the video data sent via the first communication channel is greater than the frame rate of the additional video data sent via the first communication channel, and the first bitrate (e.g., the high bitrate, described in reference to Figures 1A-1C).

(A4) In some embodiments of A1-A3, the frame rate of the video data sent via the first communication channel is less than the frame rate of the additional video data sent via the first communication channel, and the first bitrate (e.g., the low bitrate, described in reference to Figures 1A-1C) is less than the second bitrate (e.g., the average bitrate, described in reference to Figures 1A-1C).

(A5) In some embodiments of A1-A4, capturing the video data includes capturing audio data using a microphone at the glasses. For example, as described in reference to Figures 1A-1C, capturing media, video data etc. can include also capturing audio data via a microphone (e.g., microphone 837A) communicatively coupled with the head-wearable device 120.

(A6) In some embodiments of A1-A5, the narrow bandwidth communication channel is a Bluetooth channel. As described in reference to Figures 4-5, a Bluetooth channel is used to transmit video data from the head-wearable device 120 to the communicatively coupled device 130 (e.g., a smart phone 650).

(A7) In some embodiments of A1-A6, the data and the new data include at least one of: received signal strength indicator (RSSI) data and/or latency data associated with the first device. For example, data received at the head-wearable device 120 from the communicatively coupled device 130 includes RSSI data and/latency data such that the head-wearable device 120 can determine an appropriate bitrate to transfer the video data 115 to the communicatively coupled device 130 to avoid lagging video and/or video that has too low of a resolution, as described in reference to Figure 4.

(A8) In some embodiments of A1-A7, the first device is further configured to save the video data to storage at the first device. For example, as described in reference to Figures 1A-1C, the communicatively coupled device 130 is configured to save the video data 115 to a memory device of the communicatively coupled device 130 in addition to sending the video data 115 to one or more servers for livestream broadcasting and/or video calling.

(A9) In some embodiments of A1-A8, the method further includes, while the user is wearing the glasses communicatively coupled to the first device via the first narrow bandwidth communication channel, (i) in conjunction with capturing other video data using the camera at the glasses, receiving other data used to assess another data transmission characteristic of the first narrow bandwidth communication channel, and (ii) in accordance with a determination that the other data transmission characteristic satisfies a third threshold, causing the other video data to be sent via the first communication channel at a third bitrate, distinct from the first bitrate and second bitrate. For example, as described in reference to Figures 1A-1C and 4, the assessment of the data transmission characteristics is continuously monitored throughout the video streaming process, such that while the user 101 is live streaming, the video data 115 is of a highest possible quality it can be regardless of a signal strength between the head-wearable device 120 and the communicatively coupled device 130. Therefore, as the signal strength changes, the bitrate is adapted to that change in order to avoid bad quality streaming and/or lagging video data.

(A10) In some embodiments of A1-A9, the method further includes, while the user is wearing the glasses communicatively coupled to the first device via a first narrow bandwidth communication channel and prior to sending the video data via the first communication channel to the first device, compressing and encoding the video data at the glasses and/or the first device. As described in reference to Figure 2, encoding parameters are configurable by the first device or the augmented-reality glasses. Furthermore, encoding parameters may be changed to support formats that the first device may desire/require.

(A11) In some embodiments of A1-A10, while the user is wearing the glasses communicatively coupled to the first device via the first narrow bandwidth communication channel, (i) in response to capturing the video data using the camera at the glasses, display the video data at a display of the first device and (ii) in response to capturing the additional video data using the camera at the glasses, display the additional video at the display of the first device (e.g., the video preview 275, described in reference to Figures 2-4).

(A12) In some embodiments of A1-A11, while the user is wearing the augmented-reality glasses communicatively coupled to the first device via the first narrow bandwidth communication channel, in response to receiving a message from the other device associated with the other user, present the message at one of glasses and the first device (e.g., the audio cues and/or the TTS messages, described in reference to Figure 2).

(A13) In some embodiments of A1-A12, the glasses are one of augmented-reality glasses with at least one display and smart glasses without a display.

(B1) An example of a method includes while video data is being transferred from a pair of augmented-reality glasses to a first device at a first bit rate, receive a first receive ratio at the pair of augmented-reality glasses from a first device. The method further includes in accordance with a determination that the first receive ratio is greater than or equal to a first value and less than or equal to a second value, adjust the first bit rate to a second bit rate, distinct from the first bit rate and in accordance with a determination that the first receive ratio is below a third value, the third value less than the first value, adjust the first bit rate to a third bit rate, distinct from the first bit rate and the second bit rate. For example, as discussed in Figures 1-5, depending on the signal strength of the Bluetooth connection between the head-wearable device and the first device, the bit rate adapts to ensure the best video data transfer quality.

(C1) In accordance with some embodiments, a system that includes a first device and a pair of glasses, and the system is configured to perform operations corresponding to any of A1-B1.

(D1) In accordance with some embodiments, a non-transitory computer readable storage medium including instructions that, when executed by a computing device in communication with a pair of augmented-reality glasses, cause the computer device to perform operations corresponding to any of A1-B1.

(E1) In accordance with some embodiments, an electronic device configured to perform operations that correspond to any of A1-B1.

The devices described above are further detailed below, including systems, wrist-wearable devices, headset devices, and smart textile-based garments. Specific operations described above may occur as a result of specific hardware, such hardware is described in further detail below. The devices described below are not limiting and features on these devices can be removed or additional features can be added to these devices. The different devices can include one or more analogous hardware components. For brevity, analogous devices and components are described below. Any differences in the devices and components are described below in their respective sections.

As described herein, a processor (e.g., a central processing unit (CPU) or microcontroller unit (MCU)), is an electronic component that is responsible for executing instructions and controlling the operation of an electronic device (e.g., a wrist-wearable device 700, a head-wearable device, an HIPD 900, a smart textile-based garment, or other computer system). There are various types of processors that may be used interchangeably or specifically required by embodiments described herein. For example, a processor may be (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) a graphics processing unit (GPU) designed to accelerate the creation and rendering of images, videos, and animations (e.g., virtual-reality animations, such as three-dimensional modeling); (iv) a field-programmable gate array (FPGA) that can be programmed and reconfigured after manufacturing and/or customized to perform specific tasks, such as signal processing, cryptography, and machine learning; (v) a digital signal processor (DSP) designed to perform mathematical operations on signals such as audio, video, and radio waves. One of skill in the art will understand that one or more processors of one or more electronic devices may be used in various embodiments described herein.

As described herein, controllers are electronic components that manage and coordinate the operation of other components within an electronic device (e.g., controlling inputs, processing data, and/or generating outputs). Examples of controllers can include (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or DSPs. As described herein, a graphics module is a component or software module that is designed to handle graphical operations and/or processes and can include a hardware module and/or a software module.

As described herein, memory refers to electronic components in a computer or electronic device that store data and instructions for the processor to access and manipulate. The devices described herein can include volatile and non-volatile memory. Examples of memory can include (i) random access memory (RAM), such as DRAM, SRAM, DDR RAM or other random access solid state memory devices, configured to store data and instructions temporarily; (ii) read-only memory (ROM) configured to store data and instructions permanently (e.g., one or more portions of system firmware and/or boot loaders); (iii) flash memory, magnetic disk storage devices, optical disk storage devices, other non-volatile solid state storage devices, which can be configured to store data in electronic devices (e.g., universal serial bus (USB) drives, memory cards, and/or solid-state drives (SSDs)); and (iv) cache memory configured to temporarily store frequently accessed data and instructions. Memory, as described herein, can include structured data (e.g., SQL databases, MongoDB databases, GraphQL data, or JSON data). Other examples of memory can include: (i) profile data, including user account data, user settings, and/or other user data stored by the user; (ii) sensor data detected and/or otherwise obtained by one or more sensors; (iii) media content data including stored image data, audio data, documents, and the like; (iv) application data, which can include data collected and/or otherwise obtained and stored during use of an application; and/or any other types of data described herein.

As described herein, a power system of an electronic device is configured to convert incoming electrical power into a form that can be used to operate the device. A power system can include various components, including (i) a power source, which can be an alternating current (AC) adapter or a direct current (DC) adapter power supply; (ii) a charger input that can be configured to use a wired and/or wireless connection (which may be part of a peripheral interface, such as a USB, micro-USB interface, near-field magnetic coupling, magnetic inductive and magnetic resonance charging, and/or radio frequency (RF) charging); (iii) a power-management integrated circuit, configured to distribute power to various components of the device and ensure that the device operates within safe limits (e.g., regulating voltage, controlling current flow, and/or managing heat dissipation); and/or (iv) a battery configured to store power to provide usable power to components of one or more electronic devices.

As described herein, peripheral interfaces are electronic components (e.g., of electronic devices) that allow electronic devices to communicate with other devices or peripherals and can provide a means for input and output of data and signals. Examples of peripheral interfaces can include (i) USB and/or micro-USB interfaces configured for connecting devices to an electronic device; (ii) Bluetooth interfaces configured to allow devices to communicate with each other, including Bluetooth low energy (BLE); (iii) near-field communication (NFC) interfaces configured to be short-range wireless interfaces for operations such as access control; (iv) POGO pins, which may be small, spring-loaded pins configured to provide a charging interface; (v) wireless charging interfaces; (vi) global-position system (GPS) interfaces; (vii) Wi-Fi interfaces for providing a connection between a device and a wireless network; and (viii) sensor interfaces.

As described herein, sensors are electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device); (ii) biopotential-signal sensors; (iii) inertial measurement unit (e.g., IMUs) for detecting, for example, angular rate, force, magnetic field, and/or changes in acceleration; (iv) heart rate sensors for measuring a user's heart rate; (v) SpO2 sensors for measuring blood oxygen saturation and/or other biometric data of a user; (vi) capacitive sensors for detecting changes in potential at a portion of a user's body (e.g., a sensor-skin interface) and/or the proximity of other devices or objects; and (vii) light sensors (e.g., ToF sensors, infrared light sensors, or visible light sensors), and/or sensors for sensing data from the user or the user's environment. As described herein biopotential-signal-sensing components are devices used to measure electrical activity within the body (e.g., biopotential-signal sensors). Some types of biopotential-signal sensors include: (i) electroencephalography (EEG) sensors configured to measure electrical activity in the brain to diagnose neurological disorders; (ii) electrocardiography (ECG or EKG) sensors configured to measure electrical activity of the heart to diagnose heart problems; (iii) electromyography (EMG) sensors configured to measure the electrical activity of muscles and diagnose neuromuscular disorders; (iv) electrooculography (EOG) sensors configured to measure the electrical activity of eye muscles to detect eye movement and diagnose eye disorders.

As described herein, an application stored in memory of an electronic device (e.g., software) includes instructions stored in the memory. Examples of such applications include (i) games; (ii) word processors; (iii) messaging applications; (iv) media-streaming applications; (v) financial applications; (vi) calendars; (vii) clocks; (viii) web browsers; (ix) social media applications, (x) camera applications, (xi) web-based applications; (xii) health applications; (xiii) artificial-reality (AR) applications, and/or any other applications that can be stored in memory. The applications can operate in conjunction with data and/or one or more components of a device or communicatively coupled devices to perform one or more operations and/or functions.

As described herein, communication interface modules can include hardware and/or software capable of data communications using any of a variety of custom or standard wireless protocols (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocol, including communication protocols not yet developed as of the filing date of this document. A communication interface is a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, or Bluetooth). In some embodiments, a communication interface can refer to a software layer that enables different software programs to communicate with each other (e.g., application programming interfaces (APIs) and protocols such as HTTP and TCP/IP).

As described herein, a graphics module is a component or software module that is designed to handle graphical operations and/or processes and can include a hardware module and/or a software module.

As described herein, non-transitory computer-readable storage media are physical devices or storage medium that can be used to store electronic data in a non-transitory form (e.g., such that the data is stored permanently until it is intentionally deleted or modified).

### Example AR Systems 6A-6C-2

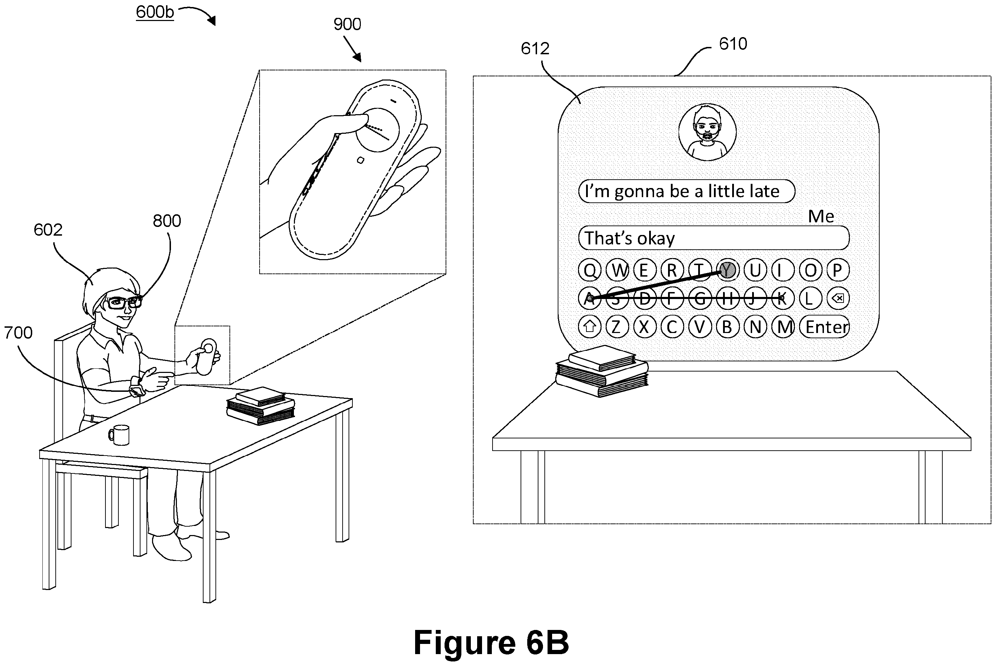

Figures 6A, 6B, 6C-1, and 6C-2 illustrate example AR systems, in accordance with some embodiments. Figure 6A shows a first AR system 600a and first example user interactions using a wrist-wearable device 700, a head-wearable device (e.g., AR device 800), and/or a handheld intermediary processing device (HIPD) 900. Figure 6B shows a second AR system 600b and second example user interactions using a wrist-wearable device 700, AR device 800, and/or an HIPD 900. Figures 6C-1 and 6C-2 show a third AR system 600c and third example user interactions using a wrist-wearable device 700, a head-wearable device (e.g., virtual-reality (VR) device 810), and/or an HIPD 900. As the skilled artisan will appreciate upon reading the descriptions provided herein, the above-example AR systems (described in detail below) can perform various functions and/or operations described above with reference to Figures 1-5.

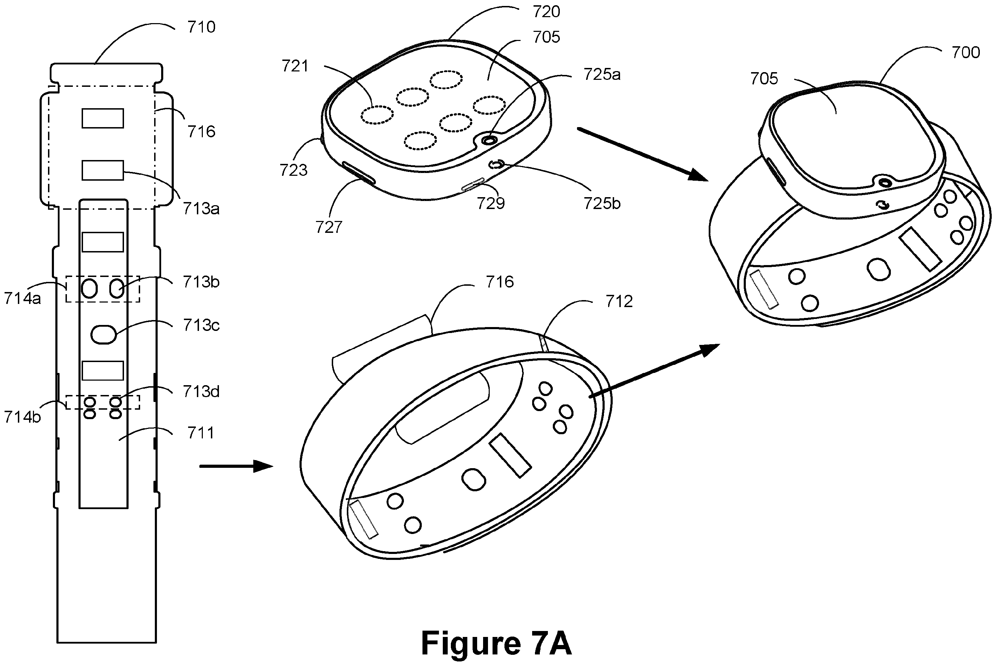

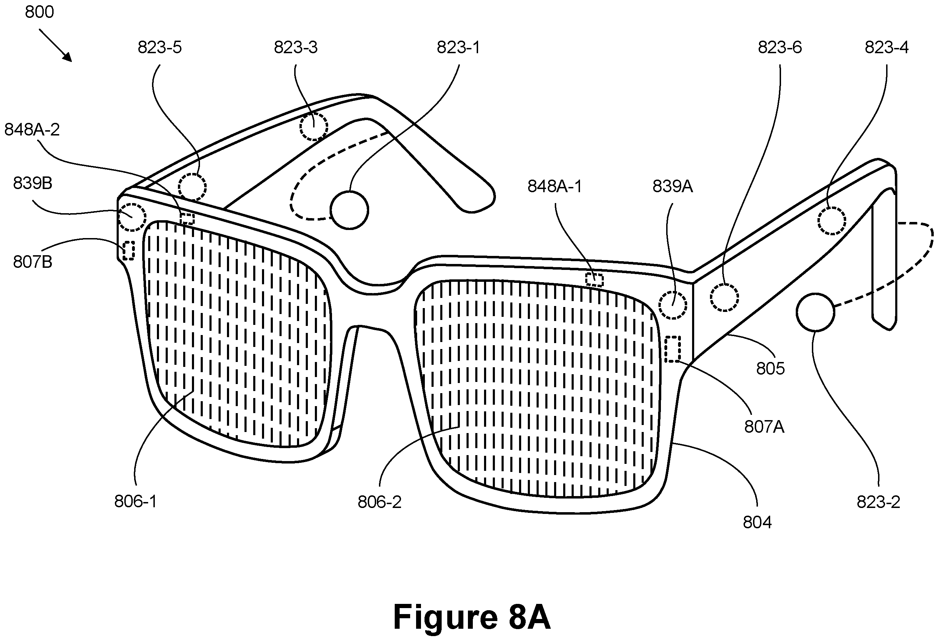

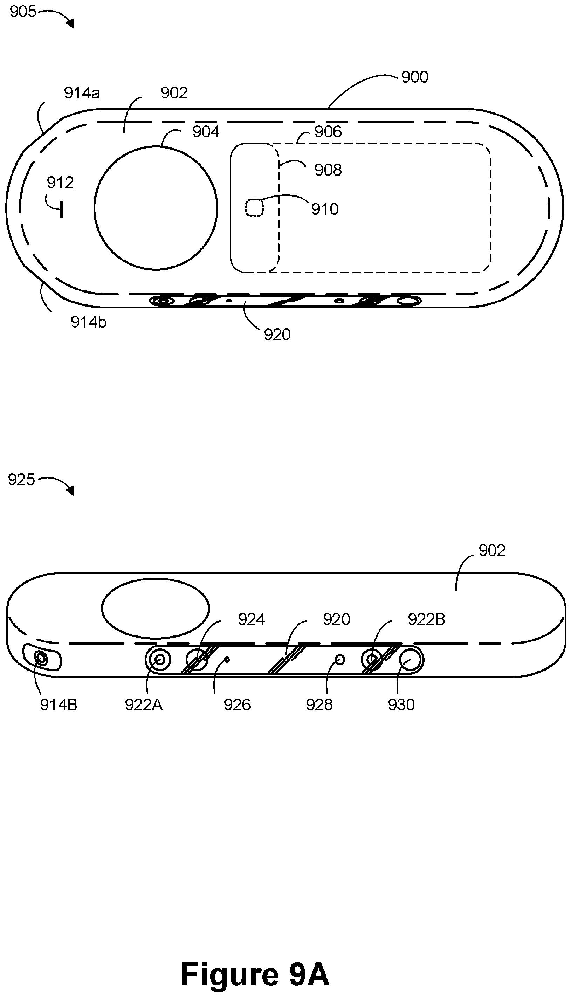

The wrist-wearable device 700 and its constituent components are described below in reference to Figures 7A-7B, the head-wearable devices and their constituent components are described below in reference to Figures 8A-8D, and the HIPD 900 and its constituent components are described below in reference to Figures 9A-9B. The wrist-wearable device 700, the head-wearable devices, and/or the HIPD 900 can communicatively couple via a network 625 (e.g., cellular, near field, Wi-Fi, personal area network, or wireless LAN). Additionally, the wrist-wearable device 700, the head-wearable devices, and/or the HIPD 900 can also communicatively couple with one or more servers 630, computers 640 (e.g., laptops or computers), mobile devices 650 (e.g., smartphones or tablets), and/or other electronic devices via the network 625 (e.g., cellular, near field, Wi-Fi, personal area network, or wireless LAN).

Turning to Figure 6A, a user 602 is shown wearing the wrist-wearable device 700 and the AR device 800 and having the HIPD 900 on their desk. The wrist-wearable device 700, the AR device 800, and the HIPD 900 facilitate user interaction with an AR environment. In particular, as shown by the first AR system 600a, the wrist-wearable device 700, the AR device 800, and/or the HIPD 900 cause presentation of one or more avatars 604, digital representations of contacts 606, and virtual objects 608. As discussed below, the user 602 can interact with the one or more avatars 604, digital representations of the contacts 606, and virtual objects 608 via the wrist-wearable device 700, the AR device 800, and/or the HIPD 900.

The user 602 can use any of the wrist-wearable device 700, the AR device 800, and/or the HIPD 900 to provide user inputs. For example, the user 602 can perform one or more hand gestures that are detected by the wrist-wearable device 700 (e.g., using one or more EMG sensors and/or IMUs, described below in reference to Figures 7A-7B) and/or AR device 800 (e.g., using one or more image sensors or cameras, described below in reference to Figures 8A-8B) to provide a user input. Alternatively, or additionally, the user 602 can provide a user input via one or more touch surfaces of the wrist-wearable device 700, the AR device 800, and/or the HIPD 900, and/or voice commands captured by a microphone of the wrist-wearable device 700, the AR device 800, and/or the HIPD 900. In some embodiments, the wrist-wearable device 700, the AR device 800, and/or the HIPD 900 include a digital assistant to help the user in providing a user input (e.g., completing a sequence of operations, suggesting different operations or commands, providing reminders, or confirming a command). In some embodiments, the user 602 can provide a user input via one or more facial gestures and/or facial expressions. For example, cameras of the wrist-wearable device 700, the AR device 800, and/or the HIPD 900 can track the user 602's eyes for navigating a user interface.

The wrist-wearable device 700, the AR device 800, and/or the HIPD 900 can operate alone or in conjunction to allow the user602 to interact with the AR environment. In some embodiments, the HIPD 900 is configured to operate as a central hub or control center for the wrist-wearable device 700, the AR device 800, and/or another communicatively coupled device. For example, the user 602 can provide an input to interact with the AR environment at any of the wrist-wearable device 700, the AR device 800, and/or the HIPD 900, and the HIPD 900 can identify one or more back-end and front-end tasks to cause the performance of the requested interaction and distribute instructions to cause the performance of the one or more back-end and front-end tasks at the wrist-wearable device 700, the AR device 800, and/or the HIPD 900. In some embodiments, a back-end task is a background-processing task that is not perceptible by the user (e.g., rendering content, decompression, or compression), and a front-end task is a user-facing task that is perceptible to the user (e.g., presenting information to the user or providing feedback to the user). As described below in reference to Figures 9A-9B, the HIPD 900 can perform the back-end tasks and provide the wrist-wearable device 700 and/or the AR device 800 operational data corresponding to the performed back-end tasks such that the wrist-wearable device 700 and/or the AR device 800 can perform the front-end tasks. In this way, the HIPD 900, which has more computational resources and greater thermal headroom than the wrist-wearable device 700 and/or the AR device 800, performs computationally intensive tasks and reduces the computer resource utilization and/or power usage of the wrist-wearable device 700 and/or the AR device 800.

In the example shown by the first AR system 600a, the HIPD 900 identifies one or more back-end tasks and front-end tasks associated with a user request to initiate an AR video call with one or more other users (represented by the avatar 604 and the digital representation of the contact 606) and distributes instructions to cause the performance of the one or more back-end tasks and front-end tasks. In particular, the HIPD 900 performs back-end tasks for processing and/or rendering image data (and other data) associated with the AR video call and provides operational data associated with the performed back-end tasks to the AR device 800 such that the AR device 800 performs front-end tasks for presenting the AR video call (e.g., presenting the avatar 604 and the digital representation of the contact 606).

In some embodiments, the HIPD 900 can operate as a focal or anchor point for causing the presentation of information. This allows the user 602 to be generally aware of where information is presented. For example, as shown in the first AR system 600a, the avatar 604 and the digital representation of the contact 606 are presented above the HIPD 900. In particular, the HIPD 900 and the AR device 800 operate in conjunction to determine a location for presenting the avatar 604 and the digital representation of the contact 606. In some embodiments, information can be presented within a predetermined distance from the HIPD 900 (e.g., within five meters). For example, as shown in the first AR system 600a, virtual object 608 is presented on the desk some distance from the HIPD 900. Similar to the above example, the HIPD 900 and the AR device 800 can operate in conjunction to determine a location for presenting the virtual object 608. Alternatively, in some embodiments, presentation of information is not bound by the HIPD 900. More specifically, the avatar 604, the digital representation of the contact 606, and the virtual object 608 do not have to be presented within a predetermined distance of the HIPD 900.

User inputs provided at the wrist-wearable device 700, the AR device 800, and/or the HIPD 900 are coordinated such that the user can use any device to initiate, continue, and/or complete an operation. For example, the user 602 can provide a user input to the AR device 800 to cause the AR device 800 to present the virtual object 608 and, while the virtual object 608 is presented by the AR device 800, the user 602 can provide one or more hand gestures via the wrist-wearable device 700 to interact and/or manipulate the virtual object 608.

Figure 6B shows the user 602 wearing the wrist-wearable device 700 and the AR device 800 and holding the HIPD 900. In the second AR system 600b, the wrist-wearable device 700, the AR device 800, and/or the HIPD 900 are used to receive and/or provide one or more messages to a contact of the user 602. In particular, the wrist-wearable device 700, the AR device 800, and/or the HIPD 900 detect and coordinate one or more user inputs to initiate a messaging application and prepare a response to a received message via the messaging application.

In some embodiments, the user 602 initiates, via a user input, an application on the wrist-wearable device 700, the AR device 800, and/or the HIPD 900 that causes the application to initiate on at least one device. For example, in the second AR system 600b, the user 602 performs a hand gesture associated with a command for initiating a messaging application (represented by messaging user interface 612), the wrist-wearable device 700 detects the hand gesture, and, based on a determination that the user 602 is wearing AR device 800, causes the AR device 800 to present a messaging user interface 612 of the messaging application. The AR device 800 can present the messaging user interface 612 to the user 602 via its display (e.g., as shown by user 602's field of view 610). In some embodiments, the application is initiated and can be run on the device (e.g., the wrist-wearable device 700, the AR device 800, and/or the HIPD 900) that detects the user input to initiate the application, and the device provides another device operational data to cause the presentation of the messaging application. For example, the wrist-wearable device 700 can detect the user input to initiate a messaging application, initiate and run the messaging application, and provide operational data to the AR device 800 and/or the HIPD 900 to cause presentation of the messaging application. Alternatively, the application can be initiated and run at a device other than the device that detected the user input. For example, the wrist-wearable device 700 can detect the hand gesture associated with initiating the messaging application and cause the HIPD 900 to run the messaging application and coordinate the presentation of the messaging application.

Further, the user 602 can provide a user input provided at the wrist-wearable device 700, the AR device 800, and/or the HIPD 900 to continue and/or complete an operation initiated at another device. For example, after initiating the messaging application via the wrist-wearable device 700 and while the AR device 800 presents the messaging user interface 612, the user 602 can provide an input at the HIPD 900 to prepare a response (e.g., shown by the swipe gesture performed on the HIPD 900). The user 602's gestures performed on the HIPD 900 can be provided and/or displayed on another device. For example, the user 602's swipe gestures performed on the HIPD 900 are displayed on a virtual keyboard of the messaging user interface 612 displayed by the AR device 800.

In some embodiments, the wrist-wearable device 700, the AR device 800, the HIPD 900, and/or other communicatively coupled devices can present one or more notifications to the user 602. The notification can be an indication of a new message, an incoming call, an application update, a status update, etc. The user 602 can select the notification via the wrist-wearable device 700, the AR device 800, or the HIPD 900 and cause presentation of an application or operation associated with the notification on at least one device. For example, the user 602 can receive a notification that a message was received at the wrist-wearable device 700, the AR device 800, the HIPD 900, and/or other communicatively coupled device and provide a user input at the wrist-wearable device 700, the AR device 800, and/or the HIPD 900 to review the notification, and the device detecting the user input can cause an application associated with the notification to be initiated and/or presented at the wrist-wearable device 700, the AR device 800, and/or the HIPD 900.

While the above example describes coordinated inputs used to interact with a messaging application, the skilled artisan will appreciate upon reading the descriptions that user inputs can be coordinated to interact with any number of applications including, but not limited to, gaming applications, social media applications, camera applications, web-based applications, financial applications, etc. For example, the AR device 800 can present to the user 602 game application data and the HIPD 900 can use a controller to provide inputs to the game. Similarly, the user 602 can use the wrist-wearable device 700 to initiate a camera of the AR device 800, and the user can use the wrist-wearable device 700, the AR device 800, and/or the HIPD 900 to manipulate the image capture (e.g., zoom in or out or apply filters) and capture image data.

Turning to Figures 6C-1 and 6C-2, the user 602 is shown wearing the wrist-wearable device 700 and a VR device 810 and holding the HIPD 900. In the third AR system 600c, the wrist-wearable device 700, the VR device 810, and/or the HIPD 900 are used to interact within an AR environment, such as a VR game or other AR application. While the VR device 810 presents a representation of a VR game (e.g., first AR game environment 620) to the user 602, the wrist-wearable device 700, the VR device 810, and/or the HIPD 900 detect and coordinate one or more user inputs to allow the user 602 to interact with the VR game.

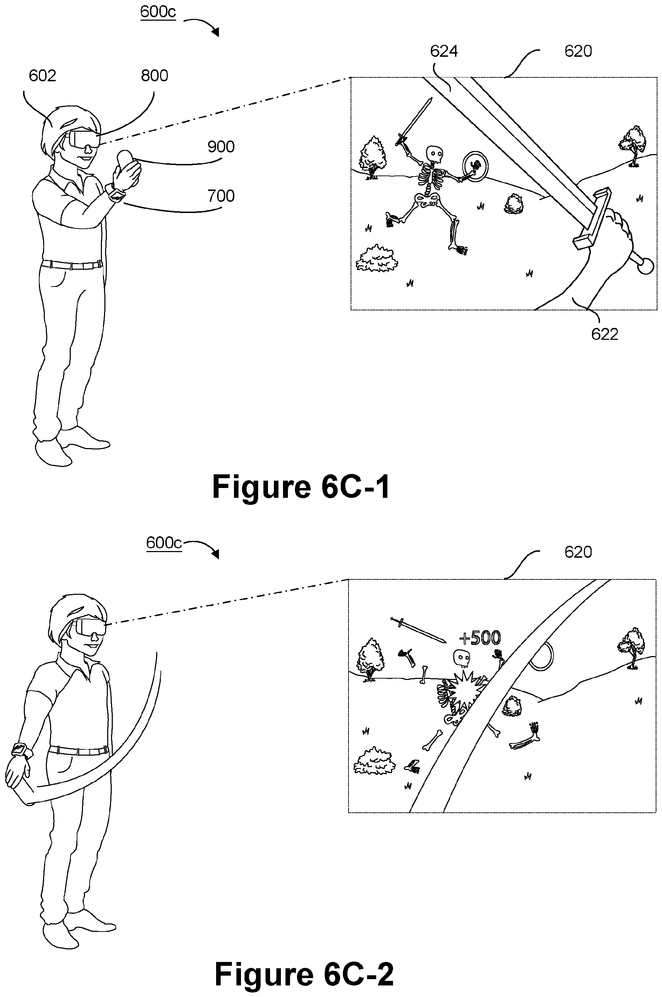

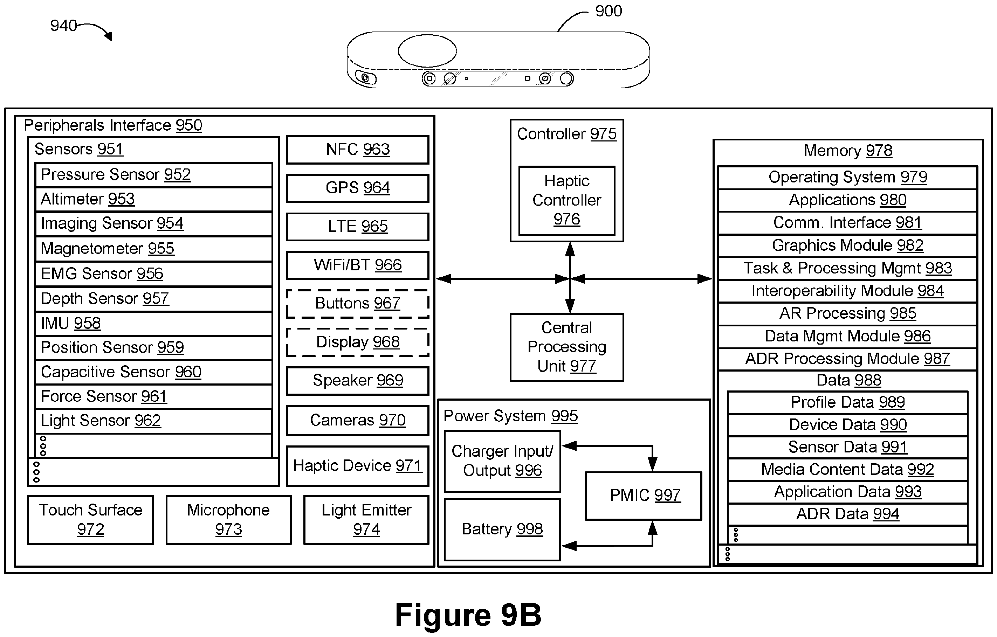

In some embodiments, the user 602 can provide a user input via the wrist-wearable device 700, the VR device 810, and/or the HIPD 900 that causes an action in a corresponding AR environment. For example, the user 602 in the third AR system 600c (shown in Figures 6C-1) raises the HIPD 900 to prepare for a swing in the first AR game environment 620. The VR device 810, responsive to the user 602 raising the HIPD 900, causes the AR representation of the user 622 to perform a similar action (e.g., raise a virtual object, such as a virtual sword 624). In some embodiments, each device uses respective sensor data and/or image data to detect the user input and provide an accurate representation of the user 602's motion. For example, imaging sensors 954 (e.g., SLAM cameras or other cameras discussed below in Figures 9A and 9B) of the HIPD 900 can be used to detect a position of the 900 relative to the user 602's body such that the virtual object can be positioned appropriately within the first AR game environment 620; sensor data from the wrist-wearable device 700 can be used to detect a velocity at which the user 602 raises the HIPD 900 such that the AR representation of the user 622 and the virtual sword 624 are synchronized with the user 602's movements; and image sensors 826 (Figures 8A-8C) of the VR device 810 can be used to represent the user 602's body, boundary conditions, or real-world objects within the first AR game environment 620.

In Figure 6C-2, the user 602 performs a downward swing while holding the HIPD 900. The user 602's downward swing is detected by the wrist-wearable device 700, the VR device 810, and/or the HIPD 900 and a corresponding action is performed in the first AR game environment 620. In some embodiments, the data captured by each device is used to improve the user's experience within the AR environment. For example, sensor data of the wrist-wearable device 700 can be used to determine a speed and/or force at which the downward swing is performed and image sensors of the HIPD 900 and/or the VR device 810 can be used to determine a location of the swing and how it should be represented in the first AR game environment 620, which, in turn, can be used as inputs for the AR environment (e.g., game mechanics, which can use detected speed, force, locations, and/or aspects of the user 602's actions to classify a user's inputs (e.g., user performs a light strike, hard strike, critical strike, glancing strike, miss) or calculate an output (e.g., amount of damage)).

While the wrist-wearable device 700, the VR device 810, and/or the HIPD 900 are described as detecting user inputs, in some embodiments, user inputs are detected at a single device (with the single device being responsible for distributing signals to the other devices for performing the user input). For example, the HIPD 900 can operate an application for generating the first AR game environment 620 and provide the VR device 810 with corresponding data for causing the presentation of the first AR game environment 620, as well as detect the 602's movements (while holding the HIPD 900) to cause the performance of corresponding actions within the first AR game environment 620. Additionally or alternatively, in some embodiments, operational data (e.g., sensor data, image data, application data, device data, and/or other data) of one or more devices is provide to a single device (e.g., the HIPD 900) to process the operational data and cause respective devices to perform an action associated with processed operational data.

Having discussed example AR systems, devices for interacting with such AR systems, and other computing systems more generally, devices and components will now be discussed in greater detail below. Some definitions of devices and components that can be included in some or all of the example devices discussed below are defined here for ease of reference. A skilled artisan will appreciate that certain types of the components described below may be more suitable for a particular set of devices and less suitable for a different set of devices. But subsequent references to the components defined here should be considered to be encompassed by the definitions provided.

In some embodiments discussed below, example devices and systems, including electronic devices and systems, will be discussed. Such example devices and systems are not intended to be limiting, and one of skill in the art will understand that alternative devices and systems to the example devices and systems described herein may be used to perform the operations and construct the systems and devices that are described herein.

As described herein, an electronic device is a device that uses electrical energy to perform a specific function. It can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device is a device that sits between two other electronic devices and/or a subset of components of one or more electronic devices, which facilitates communication, and/or data processing, and/or data transfer between the respective electronic devices and/or electronic components.

### Example Wrist-Wearable Devices

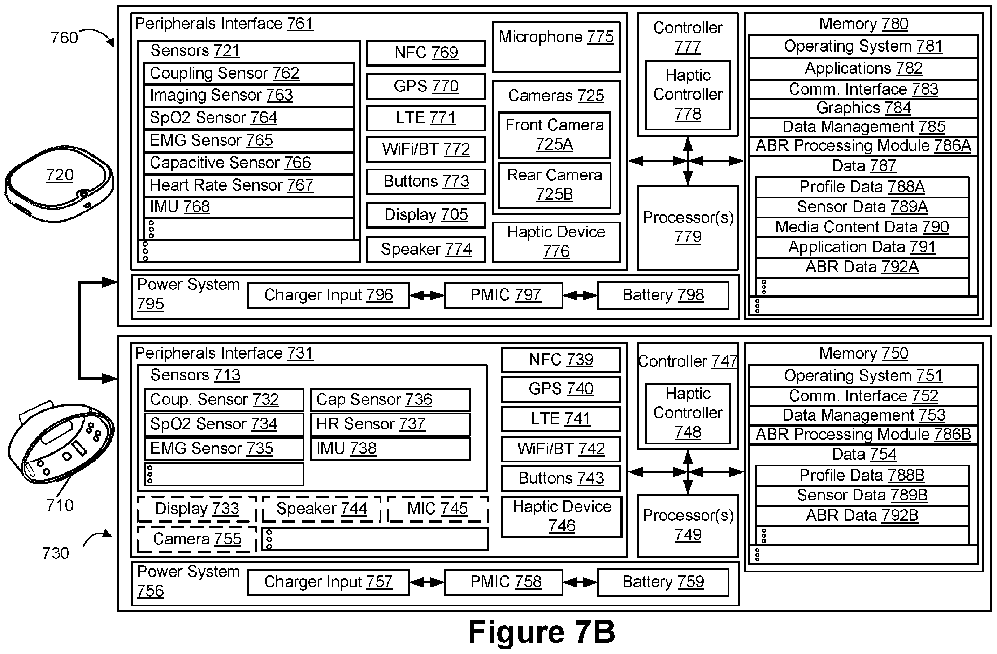

Figures 7A and 7B illustrate an example wrist-wearable device 700, in accordance with some embodiments. The wrist-wearable device 700 is an instance of the first device described in reference to 1-5 herein, such that the wrist-wearable device should be understood to have the features of the wrist-wearable device 700 and vice versa. Figure 7A illustrates components of the wrist-wearable device 700, which can be used individually or in combination, including combinations that include other electronic devices and/or electronic components.

Figure 7A shows a wearable band 710 and a watch body 720 (or capsule) being coupled, as discussed below, to form the wrist-wearable device 700. The wrist-wearable device 700 can perform various functions and/or operations associated with navigating through user interfaces and selectively opening applications, as well as the functions and/or operations described above with reference the first device described in Figures 1-5.

As will be described in more detail below, operations executed by the wrist-wearable device 700 can include (i) presenting content to a user (e.g., displaying visual content via a display 705); (ii) detecting (e.g., sensing) user input (e.g., sensing a touch on peripheral button 723 and/or at a touch screen of the display 705, a hand gesture detected by sensors (e.g., biopotential sensors)); (iii) sensing biometric data via one or more sensors 713 (e.g., neuromuscular signals, heart rate, temperature, or sleep); messaging (e.g., text, speech, or video); image capture via one or more imaging devices or cameras 725; wireless communications (e.g., cellular, near field, Wi-Fi, or personal area network); location determination; financial transactions; providing haptic feedback; alarms; notifications; biometric authentication; health monitoring; and/or sleep monitoring.

The above-example functions can be executed independently in the watch body 720, independently in the wearable band 710, and/or via an electronic communication between the watch body 720 and the wearable band 710. In some embodiments, functions can be executed on the wrist-wearable device 700 while an AR environment is being presented (e.g., via one of the AR systems 600a to 600d). As the skilled artisan will appreciate upon reading the descriptions provided herein, the novel wearable devices described herein can be used with other types of AR environments.

The wearable band 710 can be configured to be worn by a user such that an inner (or inside) surface of the wearable structure 711 of the wearable band 710 is in contact with the user's skin. When worn by a user, sensors 713 contact the user's skin. The sensors 713 can sense biometric data such as a user's heart rate, saturated oxygen level, temperature, sweat level, neuromuscular-signal sensors, or a combination thereof. The sensors 713 can also sense data about a user's environment, including a user's motion, altitude, location, orientation, gait, acceleration, position, or a combination thereof. In some embodiments, the sensors 713 are configured to track a position and/or motion of the wearable band 710. The one or more sensors 713 can include any of the sensors defined above and/or discussed below with respect to Figure 7B.

The one or more sensors 713 can be distributed on an inside and/or an outside surface of the wearable band 710. In some embodiments, the one or more sensors 713 are uniformly spaced along the wearable band 710. Alternatively, in some embodiments, the one or more sensors 713 are positioned at distinct points along the wearable band 710. As shown in Figure 7A, the one or more sensors 713 can be the same or distinct. For example, in some embodiments, the one or more sensors 713 can be shaped as a pill (e.g., sensor 713a), an oval, a circle a square, an oblong (e.g., sensor 713c), and/or any other shape that maintains contact with the user's skin (e.g., such that neuromuscular signal and/or other biometric data can be accurately measured at the user's skin). In some embodiments, the one or more sensors 713 are aligned to form pairs of sensors (e.g., for sensing neuromuscular signals based on differential sensing within each respective sensor). For example, sensor 713b is aligned with an adjacent sensor to form sensor pair 714a, and sensor 713d is aligned with an adjacent sensor to form sensor pair 714b. In some embodiments, the wearable band 710 does not have a sensor pair. Alternatively, in some embodiments, the wearable band 710 has a predetermined number of sensor pairs (one pair of sensors, three pairs of sensors, four pairs of sensors, six pairs of sensors, or sixteen pairs of sensors).

The wearable band 710 can include any suitable number of sensors 713. In some embodiments, the amount and arrangements of sensors 713 depend on the particular application for which the wearable band 710 is used. For instance, a wearable band 710 configured as an armband, wristband, or chest-band may include a plurality of sensors 713 with a different number of sensors 713 and different arrangement for each use case, such as medical use cases, compared to gaming or general day-to-day use cases.

In accordance with some embodiments, the wearable band 710 further includes an electrical ground electrode and a shielding electrode. The electrical ground and shielding electrodes, like the sensors 713, can be distributed on the inside surface of the wearable band 710 such that they contact a portion of the user's skin. For example, the electrical ground and shielding electrodes can be at an inside surface of coupling mechanism 716 or an inside surface of a wearable structure 711. The electrical ground and shielding electrodes can be formed and/or use the same components as the sensors 713. In some embodiments, the wearable band 710 includes more than one electrical ground electrode and more than one shielding electrode.

The sensors 713 can be formed as part of the wearable structure 711 of the wearable band 710. In some embodiments, the sensors 713 are flush or substantially flush with the wearable structure 711 such that they do not extend beyond the surface of the wearable structure 711. While flush with the wearable structure 711, the sensors 713 are still configured to contact the user's skin (e.g., via a skin-contacting surface). Alternatively, in some embodiments, the sensors 713 extend beyond the wearable structure 711 a predetermined distance (e.g., 0.1 mm to 2 mm) to make contact and depress into the user's skin. In some embodiments, the sensors 713 are coupled to an actuator (not shown) configured to adjust an extension height (e.g., a distance from the surface of the wearable structure 711) of the sensors 713 such that the sensors 713 make contact and depress into the user's skin. In some embodiments, the actuators adjust the extension height between 0.01 mm to 1.2 mm. This allows the user to customize the positioning of the sensors 713 to improve the overall comfort of the wearable band 710 when worn while still allowing the sensors 713 to contact the user's skin. In some embodiments, the sensors 713 are indistinguishable from the wearable structure 711 when worn by the user.

The wearable structure 711 can be formed of an elastic material, elastomers, etc., configured to be stretched and fitted to be worn by the user. In some embodiments, the wearable structure 711 is a textile or woven fabric. As described above, the sensors 713 can be formed as part of a wearable structure 711. For example, the sensors 713 can be molded into the wearable structure 711 or be integrated into a woven fabric (e.g., the sensors 713 can be sewn into the fabric and mimic the pliability of fabric (e.g., the sensors 713 can be constructed from a series of woven strands of fabric)).

The wearable structure 711 can include flexible electronic connectors that interconnect the sensors 713, the electronic circuitry, and/or other electronic components (described below in reference to Figure 7B) that are enclosed in the wearable band 710. In some embodiments, the flexible electronic connectors are configured to interconnect the sensors 713, the electronic circuitry, and/or other electronic components of the wearable band 710 with respective sensors and/or other electronic components of another electronic device (e.g., watch body 720). The flexible electronic connectors are configured to move with the wearable structure 711 such that the user adjustment to the wearable structure 711 (e.g., resizing, pulling, or folding) does not stress or strain the electrical coupling of components of the wearable band 710.

As described above, the wearable band 710 is configured to be worn by a user. In particular, the wearable band 710 can be shaped or otherwise manipulated to be worn by a user. For example, the wearable band 710 can be shaped to have a substantially circular shape such that it can be configured to be worn on the user's lower arm or wrist. Alternatively, the wearable band 710 can be shaped to be worn on another body part of the user, such as the user's upper arm (e.g., around a bicep), forearm, chest, legs, etc. The wearable band 710 can include a retaining mechanism 712 (e.g., a buckle or a hook and loop fastener) for securing the wearable band 710 to the user's wrist or other body part. While the wearable band 710 is worn by the user, the sensors 713 sense data (referred to as sensor data) from the user's skin. In particular, the sensors 713 of the wearable band 710 obtain (e.g., sense and record) neuromuscular signals.

The sensed data (e.g., sensed neuromuscular signals) can be used to detect and/or determine the user's intention to perform certain motor actions. In particular, the sensors 713 sense and record neuromuscular signals from the user as the user performs muscular activations (e.g., movements or gestures). The detected and/or determined motor action (e.g., phalange (or digits) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on the display 705 of the wrist-wearable device 700 and/or can be transmitted to a device responsible for rendering an AR environment (e.g., a head-mounted display) to perform an action in an associated AR environment, such as to control the motion of a virtual device displayed to the user. The muscular activations performed by the user can include static gestures, such as placing the user's hand palm down on a table; dynamic gestures, such as grasping a physical or virtual object; and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by the sensors 713 can be used to provide a user with an enhanced interaction with a physical object (e.g., devices communicatively coupled with the wearable band 710) and/or a virtual object in an AR application generated by an AR system (e.g., user interface objects presented on the display 705 or another computing device (e.g., a smartphone)).

In some embodiments, the wearable band 710 includes one or more haptic devices 746 (Figure 7B; e.g., a vibratory haptic actuator) that are configured to provide haptic feedback (e.g., a cutaneous and/or kinesthetic sensation) to the user's skin. The sensors 713 and/or the haptic devices 746 can be configured to operate in conjunction with multiple applications including, without limitation, health monitoring, social media, games, and AR (e.g., the applications associated with AR).

The wearable band 710 can also include a coupling mechanism 716 (e.g., a cradle or a shape of the coupling mechanism can correspond to the shape of the watch body 720 of the wrist-wearable device 700) for detachably coupling a capsule (e.g., a computing unit) or watch body 720 (via a coupling surface of the watch body 720) to the wearable band 710. In particular, the coupling mechanism 716 can be configured to receive a coupling surface proximate to the bottom side of the watch body 720 (e.g., a side opposite to a front side of the watch body 720 where the display 705 is located), such that a user can push the watch body 720 downward into the coupling mechanism 716 to attach the watch body 720 to the coupling mechanism 716. In some embodiments, the coupling mechanism 716 can be configured to receive a top side of the watch body 720 (e.g., a side proximate to the front side of the watch body 720 where the display 705 is located) that is pushed upward into the cradle, as opposed to being pushed downward into the coupling mechanism 716. In some embodiments, the coupling mechanism 716 is an integrated component of the wearable band 710 such that the wearable band 710 and the coupling mechanism 716 are a single unitary structure. In some embodiments, the coupling mechanism 716 is a type of frame or shell that allows the watch body 720 coupling surface to be retained within or on the wearable band 710 coupling mechanism 716 (e.g., a cradle, a tracker band, a support base, or a clasp).

The coupling mechanism 716 can allow for the watch body 720 to be detachably coupled to the wearable band 710 through a friction fit, a magnetic coupling, a rotation-based connector, a shear-pin coupler, a retention spring, one or more magnets, a clip, a pin shaft, a hook-and-loop fastener, or a combination thereof. A user can perform any type of motion to couple the watch body 720 to the wearable band 710 and to decouple the watch body 720 from the wearable band 710. For example, a user can twist, slide, turn, push, pull, or rotate the watch body 720 relative to the wearable band 710, or a combination thereof, to attach the watch body 720 to the wearable band 710 and to detach the watch body 720 from the wearable band 710. Alternatively, as discussed below, in some embodiments, the watch body 720 can be decoupled from the wearable band 710 by actuation of the release mechanism 729.

The wearable band 710 can be coupled with a watch body 720 to increase the functionality of the wearable band 710 (e.g., converting the wearable band 710 into a wrist-wearable device 700, adding an additional computing unit and/or battery to increase computational resources and/or a battery life of the wearable band 710, or adding additional sensors to improve sensed data). As described above, the wearable band 710 (and the coupling mechanism 716) is configured to operate independently (e.g., execute functions independently) from watch body 720. For example, the coupling mechanism 716 can include one or more sensors 713 that contact a user's skin when the wearable band 710 is worn by the user and provide sensor data for determining control commands.

A user can detach the watch body 720 (or capsule) from the wearable band 710 in order to reduce the encumbrance of the wrist-wearable device 700 to the user. For embodiments in which the watch body 720 is removable, the watch body 720 can be referred to as a removable structure, such that in these embodiments the wrist-wearable device 700 includes a wearable portion (e.g., the wearable band 710) and a removable structure (the watch body 720).

Turning to the watch body 720, the watch body 720 can have a substantially rectangular or circular shape. The watch body 720 is configured to be worn by the user on their wrist or on another body part. More specifically, the watch body 720 is sized to be easily carried by the user, attached on a portion of the user's clothing, and/or coupled to the wearable band 710 (forming the wrist-wearable device 700). As described above, the watch body 720 can have a shape corresponding to the coupling mechanism 716 of the wearable band 710. In some embodiments, the watch body 720 includes a single release mechanism 729 or multiple release mechanisms (e.g., two release mechanisms 729 positioned on opposing sides of the watch body 720, such as spring-loaded buttons) for decoupling the watch body 720 and the wearable band 710. The release mechanism 729 can include, without limitation, a button, a knob, a plunger, a handle, a lever, a fastener, a clasp, a dial, a latch, or a combination thereof.

A user can actuate the release mechanism 729 by pushing, tuming, lifting, depressing, shifting, or performing other actions on the release mechanism 729. Actuation of the release mechanism 729 can release (e.g., decouple) the watch body 720 from the coupling mechanism 716 of the wearable band 710, allowing the user to use the watch body 720 independently from wearable band 710 and vice versa. For example, decoupling the watch body 720 from the wearable band 710 can allow the user to capture images using rear-facing camera 725b. Although the coupling mechanism 716 is shown positioned at a corner of watch body 720, the release mechanism 729 can be positioned anywhere on watch body 720 that is convenient for the user to actuate. In addition, in some embodiments, the wearable band 710 can also include a respective release mechanism for decoupling the watch body 720 from the coupling mechanism 716. In some embodiments, the release mechanism 729 is optional and the watch body 720 can be decoupled from the coupling mechanism 716, as described above (e.g., via twisting or rotating).

The watch body 720 can include one or more peripheral buttons 723 and 727 for performing various operations at the watch body 720. For example, the peripheral buttons 723 and 727 can be used to turn on or wake (e.g., transition from a sleep state to an active state) the display 705, unlock the watch body 720, increase or decrease volume, increase or decrease brightness, interact with one or more applications, interact with one or more user interfaces. Additionally, or alternatively, in some embodiments, the display 705 operates as a touch screen and allows the user to provide one or more inputs for interacting with the watch body 720.

In some embodiments, the watch body 720 includes one or more sensors 721. The sensors 721 of the watch body 720 can be the same or distinct from the sensors 713 of the wearable band 710. The sensors 721 of the watch body 720 can be distributed on an inside and/or an outside surface of the watch body 720. In some embodiments, the sensors 721 are configured to contact a user's skin when the watch body 720 is worn by the user. For example, the sensors 721 can be placed on the bottom side of the watch body 720 and the coupling mechanism 716 can be a cradle with an opening that allows the bottom side of the watch body 720 to directly contact the user's skin. Alternatively, in some embodiments, the watch body 720 does not include sensors that are configured to contact the user's skin (e.g., including sensors internal and/or external to the watch body 720 that are configured to sense data of the watch body 720 and the watch body 720's surrounding environment). In some embodiments, the sensors 713 are configured to track a position and/or motion of the watch body 720.

The watch body 720 and the wearable band 710 can share data using a wired communication method (e.g., a Universal Asynchronous Receiver/Transmitter (UART) or a USB transceiver) and/or a wireless communication method (e.g., near-field communication or Bluetooth). For example, the watch body 720 and the wearable band 710 can share data sensed by the sensors 713 and 721, as well as application- and device-specific information (e.g., active and/or available applications), output devices (e.g., display or speakers), and/or input devices (e.g., touch screens, microphones, or imaging sensors).

In some embodiments, the watch body 720 can include, without limitation, a front-facing camera 725a and/or a rear-facing camera 725b, sensors 721 (e.g., a biometric sensor, an IMU sensor, a heart rate sensor, a saturated oxygen sensor, a neuromuscular-signal sensor, an altimeter sensor, a temperature sensor, a bioimpedance sensor, a pedometer sensor, an optical sensor (e.g., Figure 7B; imaging sensor 763), a touch sensor, a sweat sensor). In some embodiments, the watch body 720 can include one or more haptic devices 776 (Figure 7B; a vibratory haptic actuator) that is configured to provide haptic feedback (e.g., a cutaneous and/or kinesthetic sensation) to the user. The sensors 721 and/or the haptic device 776 can also be configured to operate in conjunction with multiple applications, including, without limitation, health-monitoring applications, social media applications, game applications, and AR applications (e.g., the applications associated with AR).

As described above, the watch body 720 and the wearable band 710, when coupled, can form the wrist-wearable device 700. When coupled, the watch body 720 and wearable band 710 operate as a single device to execute functions (e.g., operations, detections, or communications) described herein. In some embodiments, each device is provided with particular instructions for performing the one or more operations of the wrist-wearable device 700. For example, in accordance with a determination that the watch body 720 does not include neuromuscular-signal sensors, the wearable band 710 can include alternative instructions for performing associated instructions (e.g., providing sensed neuromuscular-signal data to the watch body 720 via a different electronic device). Operations of the wrist-wearable device 700 can be performed by the watch body 720 alone or in conjunction with the wearable band 710 (e.g., via respective processors and/or hardware components) and vice versa. In some embodiments, operations of the wrist-wearable device 700, the watch body 720, and/or the wearable band 710 can be performed in conjunction with one or more processors and/or hardware components of another communicatively coupled device (e.g., Figures 9A-9B; the HIPD 900).

As described below with reference to the block diagram of Figure 7B, the wearable band 710 and/or the watch body 720 can each include independent resources required to independently execute functions. For example, the wearable band 710 and/or the watch body 720 can each include a power source (e.g., a battery), a memory, data storage, a processor (e.g., a CPU), communications, a light source, and/or input/output devices.

Figure 7B shows block diagrams of a computing system 730 corresponding to the wearable band 710 and a computing system 760 corresponding to the watch body 720, according to some embodiments. A computing system of the wrist-wearable device 700 includes a combination of components of the wearable band computing system 730 and the watch body computing system 760, in accordance with some embodiments.

The watch body 720 and/or the wearable band 710 can include one or more components shown in watch body computing system 760. In some embodiments, a single integrated circuit includes all or a substantial portion of the components of the watch body computing system 760 that are included in a single integrated circuit. Alternatively, in some embodiments, components of the watch body computing system 760 are included in a plurality of integrated circuits that are communicatively coupled. In some embodiments, the watch body computing system 760 is configured to couple (e.g., via a wired or wireless connection) with the wearable band computing system 730, which allows the computing systems to share components, distribute tasks, and/or perform other operations described herein (individually or as a single device).

The watch body computing system 760 can include one or more processors 779, a controller 777, a peripherals interface 761, a power system 795, and memory (e.g., a memory 780), each of which are defined above and described in more detail below.

The power system 795 can include a charger input 796, a power-management integrated circuit (PMIC) 797, and a battery 798, each of which are defined above. In some embodiments, a watch body 720 and a wearable band 710 can have respective charger inputs (e.g., charger inputs 796 and 757), respective batteries (e.g., batteries 798 and 759), and can share power with each other (e.g., the watch body 720 can power and/or charge the wearable band 710 and vice versa). Although watch body 720 and/or the wearable band 710 can include respective charger inputs, a single charger input can charge both devices when coupled. The watch body 720 and the wearable band 710 can receive a charge using a variety of techniques. In some embodiments, the watch body 720 and the wearable band 710 can use a wired charging assembly (e.g., power cords) to receive the charge. Alternatively, or in addition, the watch body 720 and/or the wearable band 710 can be configured for wireless charging. For example, a portable charging device can be designed to mate with a portion of watch body 720 and/or wearable band 710 and wirelessly deliver usable power to a battery of watch body 720 and/or wearable band 710. The watch body 720 and the wearable band 710 can have independent power systems (e.g., power system 795 and 756) to enable each to operate independently. The watch body 720 and wearable band 710 can also share power (e.g., one can charge the other) via respective PMICs (e.g., PMICs 797 and 758) that can share power over power and ground conductors and/or over wireless charging antennas.

In some embodiments, the peripherals interface 761 can include one or more sensors 721, many of which listed below are defined above. The sensors 721 can include one or more coupling sensors 762 for detecting when the watch body 720 is coupled with another electronic device (e.g., a wearable band 710). The sensors 721 can include imaging sensors 763 (one or more of the cameras 725 and/or separate imaging sensors 763 (e.g., thermal-imaging sensors)). In some embodiments, the sensors 721 include one or more SpO2 sensors 764. In some embodiments, the sensors 721 include one or more biopotential-signal sensors (e.g., EMG sensors 765, which may be disposed on a user-facing portion of the watch body 720 and/or the wearable band 710). In some embodiments, the sensors 721 include one or more capacitive sensors 766. In some embodiments, the sensors 721 include one or more heart rate sensors 767. In some embodiments, the sensors 721 include one or more IMUs 768. In some embodiments, one or more IMUs 768 can be configured to detect movement of a user's hand or other location that the watch body 720 is placed or held.

In some embodiments, the peripherals interface 761 includes an NFC component 769, a GPS component 770, a long-term evolution (LTE) component 771, and/or a Wi-Fi and/or Bluetooth communication component 772. In some embodiments, the peripherals interface 761 includes one or more buttons 773 (e.g., the peripheral buttons 723 and 727 in Figure 7A), which, when selected by a user, cause operations to be performed at the watch body 720. In some embodiments, the peripherals interface 761 includes one or more indicators, such as a light-emitting diode (LED), to provide a user with visual indicators (e.g., message received, low battery, an active microphone, and/or a camera).

The watch body 720 can include at least one display 705 for displaying visual representations of information or data to the user, including user-interface elements and/or three-dimensional (3D) virtual objects. The display can also include a touch screen for inputting user inputs, such as touch gestures, swipe gestures, and the like. The watch body 720 can include at least one speaker 774 and at least one microphone 775 for providing audio signals to the user and receiving audio input from the user. The user can provide user inputs through the microphone 775 and can also receive audio output from the speaker 774 as part of a haptic event provided by the haptic controller 778. The watch body 720 can include at least one camera 725, including a front-facing camera 725a and a rear-facing camera 725b. The cameras 725 can include ultra-wide-angle cameras, wide-angle cameras, fish-eye cameras, spherical cameras, telephoto cameras, depth-sensing cameras, or other types of cameras.

The watch body computing system 760 can include one or more haptic controllers 778 and associated componentry (e.g., haptic devices 776) for providing haptic events at the watch body 720 (e.g., a vibrating sensation or audio output in response to an event at the watch body 720). The haptic controllers 778 can communicate with one or more haptic devices 776, such as electroacoustic devices, including a speaker of the one or more speakers 774 and/or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). The haptic controller 778 can provide haptic events to respective haptic actuators that are capable of being sensed by a user of the watch body 720. In some embodiments, the one or more haptic controllers 778 can receive input signals from an application of the applications 782.

In some embodiments, the computer system 730 and/or the computer system 760 can include memory 780, which can be controlled by a memory controller of the one or more controllers 777 and/or one or more processors 779. In some embodiments, software components stored in the memory 780 include one or more applications 782 configured to perform operations at the watch body 720. In some embodiments, the one or more applications 782 include games, word processors, messaging applications, calling applications, web browsers, social media applications, media streaming applications, financial applications, calendars, clocks, etc. In some embodiments, software components stored in the memory 780 include one or more communication interface modules 783 as defined above. In some embodiments, software components stored in the memory 780 include one or more graphics modules 784 for rendering, encoding, and/or decoding audio and/or visual data; and one or more data management modules 785 for collecting, organizing, and/or providing access to the data 787 stored in memory 780. In some embodiments, software components stored in the memory 780 include an adaptive bit rate (ABR) processing module 786A, which is configured to perform the features described above in reference to Figures 1-5]. In some embodiments, one or more of applications 782 and/or one or more modules can work in conjunction with one another to perform various tasks at the watch body 720. For example, the ABR processing module processes the data transmission characteristics (e.g., RSSI/latency) to determine what the transmission bit rate needs to be for an optimal video data transmission.

In some embodiments, software components stored in the memory 780 can include one or more operating systems 781 (e.g., a Linux-based operating system, an Android operating system, etc.). The memory 780 can also include data 787. The data 787 can include profile data 788A, sensor data 789A, media content data 790, application data 791, and adaptive bit rate (ABR) data 792A, which stores data related to the performance of the features described above in reference to Figures 1-5].

It should be appreciated that the watch body computing system 760 is an example of a computing system within the watch body 720, and that the watch body 720 can have more or fewer components than shown in the watch body computing system 760, combine two or more components, and/or have a different configuration and/or arrangement of the components. The various components shown in watch body computing system 760 are implemented in hardware, software, firmware, or a combination thereof, including one or more signal processing and/or application-specific integrated circuits.

Turning to the wearable band computing system 730, one or more components that can be included in the wearable band 710 are shown. The wearable band computing system 730 can include more or fewer components than shown in the watch body computing system 760, combine two or more components, and/or have a different configuration and/or arrangement of some or all of the components. In some embodiments, all, or a substantial portion of the components of the wearable band computing system 730 are included in a single integrated circuit. Alternatively, in some embodiments, components of the wearable band computing system 730 are included in a plurality of integrated circuits that are communicatively coupled. As described above, in some embodiments, the wearable band computing system 730 is configured to couple (e.g., via a wired or wireless connection) with the watch body computing system 760, which allows the computing systems to share components, distribute tasks, and/or perform other operations described herein (individually or as a single device).

The wearable band computing system 730, similar to the watch body computing system 760, can include one or more processors 749, one or more controllers 747 (including one or more haptics controller 748), a peripherals interface 731 that can include one or more sensors 713 and other peripheral devices, power source (e.g., a power system 756), and memory (e.g., a memory 750) that includes an operating system (e.g., an operating system 751), data (e.g., data 754 including profile data 788B, sensor data 789B, adaptive bit rate (ABR) data 792B, etc.), and one or more modules (e.g., a communications interface module 752, a data management module 753, an adaptive bit rate (ABR) data processing module 786B, etc.).

The one or more sensors 713 can be analogous to sensors 721 of the computer system 760 in light of the definitions above. For example, sensors 713 can include one or more coupling sensors 732, one or more SpO2 sensors 734, one or more EMG sensors 735, one or more capacitive sensors 736, one or more heart rate sensors 737, and one or more IMU sensors 738.

The peripherals interface 731 can also include other components analogous to those included in the peripheral interface 761 of the computer system 760, including an NFC component 739, a GPS component 740, an LTE component 741, a Wi-Fi and/or Bluetooth communication component 742, and/or one or more haptic devices 776 as described above in reference to peripherals interface 761. In some embodiments, the peripherals interface 731 includes one or more buttons 743, a display 733, a speaker 744, a microphone 745, and a camera 755. In some embodiments, the peripherals interface 731 includes one or more indicators, such as an LED.

It should be appreciated that the wearable band computing system 730 is an example of a computing system within the wearable band 710, and that the wearable band 710 can have more or fewer components than shown in the wearable band computing system 730, combine two or more components, and/or have a different configuration and/or arrangement of the components. The various components shown in wearable band computing system 730 can be implemented in one or a combination of hardware, software, and firmware, including one or more signal processing and/or application-specific integrated circuits.

The wrist-wearable device 700 with respect to Figures 7A is an example of the wearable band 710 and the watch body 720 coupled, so the wrist-wearable device 700 will be understood to include the components shown and described for the wearable band computing system 730 and the watch body computing system 760. In some embodiments, wrist-wearable device 700 has a split architecture (e.g., a split mechanical architecture or a split electrical architecture) between the watch body 720 and the wearable band 710. In other words, all of the components shown in the wearable band computing system 730 and the watch body computing system 760 can be housed or otherwise disposed in a combined watch device 700, or within individual components of the watch body 720, wearable band 710, and/or portions thereof (e.g., a coupling mechanism 716 of the wearable band 710).

The techniques described above can be used with any device for sensing neuromuscular signals, including the arm-wearable devices of Figure 7A-7B, but could also be used with other types of wearable devices for sensing neuromuscular signals (such as body-wearable or head-wearable devices that might have neuromuscular sensors closer to the brain or spinal column).

In some embodiments, a wrist-wearable device 700 can be used in conjunction with a head-wearable device described below (e.g., AR device 800 and VR device 810) and/or an HIPD 900, and the wrist-wearable device 700 can also be configured to be used to allow a user to control aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable device, attention will now be turned to example head-wearable devices, such AR device 800 and VR device 810.

### Example Head-Wearable Devices

Figures 8A, 8B-1, 8B-2, and 8C show example head-wearable devices, in accordance with some embodiments. Head-wearable devices can include, but are not limited to, AR devices 800 (e.g., AR or smart eyewear devices, such as smart glasses, smart monocles, smart contacts, etc.), VR devices 810 (e.g., VR headsets or head-mounted displays (HMDs)), or other ocularly coupled devices. The AR devices 800 and the VR devices 810 are instances of the head-wearable device 120 described in reference to Figures 1-5 herein, such that the head-wearable device should be understood to have the features of the AR devices 800 and/or the VR devices 810 and vice versa. The AR devices 800 and the VR devices 810 can perform various functions and/or operations associated with navigating through user interfaces and selectively opening applications, as well as the functions and/or operations described above with reference to Figures 1-5.

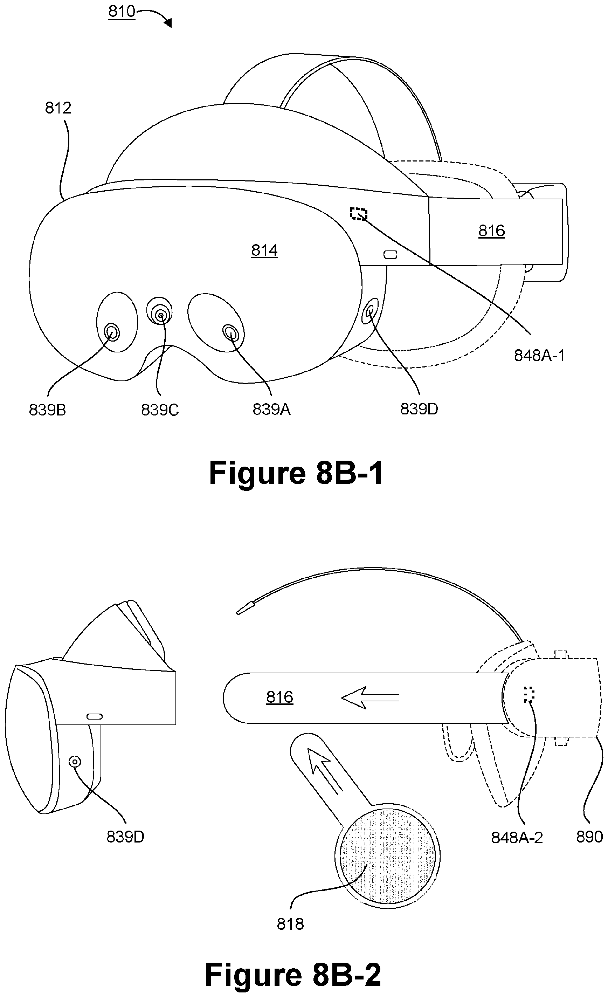

In some embodiments, an AR system (e.g., Figures 6A-6D-2; AR systems 600a-600d) includes an AR device 800 (as shown in Figure 8A) and/or VR device 810 (as shown in Figures 8B-1-B-2). In some embodiments, the AR device 800 and the VR device 810 can include one or more analogous components (e.g., components for presenting interactive AR environments, such as processors, memory, and/or presentation devices, including one or more displays and/or one or more waveguides), some of which are described in more detail with respect to Figure 8C. The head-wearable devices can use display projectors (e.g., display projector assemblies 807A and 807B) and/or waveguides for projecting representations of data to a user. Some embodiments of head-wearable devices do not include displays.

Figure 8A shows an example visual depiction of the AR device 800 (e.g., which may also be described herein as augmented-reality glasses and/or smart glasses). The AR device 800 can work in conjunction with additional electronic components that are not shown in Figures 8A, such as a wearable accessory device and/or an intermediary processing device, in electronic communication or otherwise configured to be used in conjunction with the AR device 800. In some embodiments, the wearable accessory device and/or the intermediary processing device may be configured to couple with the AR device 800 via a coupling mechanism in electronic communication with a coupling sensor 824, where the coupling sensor 824 can detect when an electronic device becomes physically or electronically coupled with the AR device 800. In some embodiments, the AR device 800 can be configured to couple to a housing (e.g., a portion of frame 804 or temple arms 805), which may include one or more additional coupling mechanisms configured to couple with additional accessory devices. The components shown in Figure 8A can be implemented in hardware, software, firmware, or a combination thereof, including one or more signal-processing components and/or application-specific integrated circuits (ASICs).

The AR device 800 includes mechanical glasses components, including a frame 804 configured to hold one or more lenses (e.g., one or both lenses 806-1 and 806-2). One of ordinary skill in the art will appreciate that the AR device 800 can include additional mechanical components, such as hinges configured to allow portions of the frame 804 of the AR device 800 to be folded and unfolded, a bridge configured to span the gap between the lenses 806-1 and 806-2 and rest on the user's nose, nose pads configured to rest on the bridge of the nose and provide support for the AR device 800, earpieces configured to rest on the user's ears and provide additional support for the AR device 800, temple arms 805 configured to extend from the hinges to the earpieces of the AR device 800, and the like. One of ordinary skill in the art will further appreciate that some examples of the AR device 800 can include none of the mechanical components described herein. For example, smart contact lenses configured to present AR to users may not include any components of the AR device 800.

The lenses 806-1 and 806-2 can be individual displays or display devices (e.g., a waveguide for projected representations). The lenses 806-1 and 806-2 may act together or independently to present an image or series of images to a user. In some embodiments, the lenses 806-1 and 806-2 can operate in conjunction with one or more display projector assemblies 807A and 807B to present image data to a user. While the AR device 800 includes two displays, embodiments of this disclosure may be implemented in AR devices with a single near-eye display (NED) or more than two NEDs.

The AR device 800 includes electronic components, many of which will be described in more detail below with respect to Figure 8C. Some example electronic components are illustrated in Figure 8A, including sensors 823-1, 823-2, 823-3, 823-4, 823-5, and 823-6, which can be distributed along a substantial portion of the frame 804 of the AR device 800. The different types of sensors are described below in reference to Figure 8C. The AR device 800 also includes a left camera 839A and a right camera 839B, which are located on different sides of the frame 804. And the eyewear device includes one or more processors 848A and 848B (e.g., an integral microprocessor, such as an ASIC) that is embedded into a portion of the frame 804.

Figures 8B-1 and 8B-2 show an example visual depiction of the VR device 810 (e.g., a head-mounted display (HMD) 812, also referred to herein as an AR headset, a head-wearable device, or a VR headset). The HMD 812 includes a front body 814 and a frame 816 (e.g., a strap or band) shaped to fit around a user's head. In some embodiments, the front body 814 and/or the frame 816 includes one or more electronic elements for facilitating presentation of and/or interactions with an AR and/or VR system (e.g., displays, processors (e.g., processor 848A-1), IMUs, tracking emitters or detectors, or sensors). In some embodiments, the HMD 812 includes output audio transducers (e.g., an audio transducer 818-1), as shown in Figure 8B-2. In some embodiments, one or more components, such as the output audio transducer(s) 818 and the frame 816, can be configured to attach and detach (e.g., are detachably attachable) to the HMD 812 (e.g., a portion or all of the frame 816 and/or the output audio transducer 818), as shown in Figure 8B-2. In some embodiments, coupling a detachable component to the HMD 812 causes the detachable component to come into electronic communication with the HMD 812. The VR device 810 includes electronic components, many of which will be described in more detail below with respect to Figure 8C.

Figures 8B-1 and 8B-2 also show that the VR device 810 having one or more cameras, such as the left camera 839A and the right camera 839B, which can be analogous to the left and right cameras on the frame 804 of the AR device 800. In some embodiments, the VR device 810 includes one or more additional cameras (e.g., cameras 839C and 839D), which can be configured to augment image data obtained by the cameras 839A and 839B by providing more information. For example, the camera 839C can be used to supply color information that is not discerned by cameras 839A and 839B. In some embodiments, one or more of the cameras 839A to 839D can include an optional IR (infrared) cut filter configured to remove IR light from being received at the respective camera sensors.

The VR device 810 can include a housing 890 storing one or more components of the VR device 810 and/or additional components of the VR device 810. The housing 890 can be a modular electronic device configured to couple with the VR device 810 (or an AR device 800) and supplement and/or extend the capabilities of the VR device 810 (or an AR device 800). For example, the housing 890 can include additional sensors, cameras, power sources, and processors (e.g., processor 848A-2). to improve and/or increase the functionality of the VR device 810. Examples of the different components included in the housing 890 are described below in reference to Figure 8C.

Alternatively, or in addition, in some embodiments, the head-wearable device, such as the VR device 810 and/or the AR device 800, includes, or is communicatively coupled to, another external device (e.g., a paired device), such as an HIPD 9 (discussed below in reference to Figures 9A-9B) and/or an optional neckband. The optional neckband can couple to the head-wearable device via one or more connectors (e.g., wired or wireless connectors). The head-wearable device and the neckband can operate independently without any wired or wireless connection between them. In some embodiments, the components of the head-wearable device and the neckband are located on one or more additional peripheral devices paired with the head-wearable device, the neckband, or some combination thereof. Furthermore, the neckband is intended to represent any suitable type or form of paired device. Thus, the following discussion of neckbands may also apply to various other paired devices, such as smartwatches, smartphones, wrist bands, other wearable devices, hand-held controllers, tablet computers, or laptop computers.

In some situations, pairing external devices, such as an intermediary processing device (e.g., an HIPD device 900, an optional neckband, and/or a wearable accessory device) with the head-wearable devices (e.g., an AR device 800 and/or a VR device 810) enables the head-wearable devices to achieve a similar form factor of a pair of glasses while still providing sufficient battery and computational power for expanded capabilities. Some, or all, of the battery power, computational resources, and/or additional features of the head-wearable devices can be provided by a paired device or shared between a paired device and the head-wearable devices, thus reducing the weight, heat profile, and form factor of the head-wearable device overall while allowing the head-wearable device to retain its desired functionality. For example, the intermediary processing device (e.g., the HIPD 900) can allow components that would otherwise be included in a head-wearable device to be included in the intermediary processing device (and/or a wearable device or accessory device), thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computational capacity than might otherwise have been possible on the head-wearable devices, standing alone. Because weight carried in the intermediary processing device can be less invasive to a user than weight carried in the head-wearable devices, a user may tolerate wearing a lighter eyewear device and carrying or wearing the paired device for greater lengths of time than the user would tolerate wearing a heavier eyewear device standing alone, thereby enabling an AR environment to be incorporated more fully into a user's day-to-day activities.

In some embodiments, the intermediary processing device is communicatively coupled with the head-wearable device and/or to other devices. The other devices may provide certain functions (e.g., tracking, localizing, depth mapping, processing, and/or storage) to the head-wearable device. In some embodiments, the intermediary processing device includes a controller and a power source. In some embodiments, sensors of the intermediary processing device are configured to sense additional data that can be shared with the head-wearable devices in an electronic format (analog or digital).

The controller of the intermediary processing device processes information generated by the sensors on the intermediary processing device and/or the head-wearable devices. The intermediary processing device, such as an HIPD 900, can process information generated by one or more of its sensors and/or information provided by other communicatively coupled devices. For example, a head-wearable device can include an IMU, and the intermediary processing device (a neckband and/or an HIPD 900) can compute all inertial and spatial calculations from the IMUs located on the head-wearable device. Additional examples of processing performed by a communicatively coupled device, such as the HIPD 900, are provided below in reference to Figures 9A and 9B.

AR systems may include a variety of types of visual feedback mechanisms. For example, display devices in the AR devices 800 and/or the VR devices 810 may include one or more liquid-crystal displays (LCDs), light emitting diode (LED) displays, organic LED (OLED) displays, and/or any other suitable type of display screen. AR systems may include a single display screen for both eyes or may provide a display screen for each eye, which may allow for additional flexibility for varifocal adjustments or for correcting a refractive error associated with the user's vision. Some AR systems also include optical subsystems having one or more lenses (e.g., conventional concave or convex lenses, Fresnel lenses, or adjustable liquid lenses) through which a user may view a display screen. In addition to or instead of using display screens, some AR systems include one or more projection systems. For example, display devices in the AR device 800 and/or the VR device 810 may include micro-LED projectors that project light (e.g., using a waveguide) into display devices, such as clear combiner lenses that allow ambient light to pass through. The display devices may refract the projected light toward a user's pupil and may enable a user to simultaneously view both AR content and the real world. AR systems may also be configured with any other suitable type or form of image projection system. As noted, some AR systems may, instead of blending an artificial reality with actual reality, substantially replace one or more of a user's sensory perceptions of the real world with a virtual experience.

While the example head-wearable devices are respectively described herein as the AR device 800 and the VR device 810, either or both of the example head-wearable devices described herein can be configured to present fully immersive VR scenes presented in substantially all of a user's field of view, additionally or alternatively to, subtler augmented-reality scenes that are presented within a portion, less than all, of the user's field of view.

In some embodiments, the AR device 800 and/or the VR device 810 can include haptic feedback systems. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback can be implemented using motors, piezoelectric actuators, fluidic systems, and/or a variety of other types of feedback mechanisms. The haptic feedback systems may be implemented independently of other AR devices, within other AR devices, and/or in conjunction with other AR devices (e.g., wrist-wearable devices that may be incorporated into headwear, gloves, body suits, handheld controllers, environmental devices (e.g., chairs or floormats), and/or any other type of device or system, such as a wrist-wearable device 700, an HIPD 900, smart textile-based garment), and/or other devices described herein.

Figure 8C illustrates a computing system 820 and an optional housing 890, each of which shows components that can be included in a head-wearable device (e.g., the AR device 800 and/or the VR device 810). In some embodiments, more or fewer components can be included in the optional housing 890 depending on practical restraints of the respective head-wearable device being described. Additionally or alternatively, the optional housing 890 can include additional components to expand and/or augment the functionality of a head-wearable device.

In some embodiments, the computing system 820 and/or the optional housing 890 can include one or more peripheral interfaces 822A and822B, one or more power systems 842A and 842B (including charger input 843, PMIC 844, and battery 845), one or more controllers 846A and 846B (including one or more haptic controllers 847), one or more processors 848A and 848B (as defined above, including any of the examples provided), and memory 850A and 850B, which can all be in electronic communication with each other. For example, the one or more processors 848A and/or 848B can be configured to execute instructions stored in the memory 850A and/or 850B, which can cause a controller of the one or more controllers 846A and/or 846B to cause operations to be performed at one or more peripheral devices of the peripherals interfaces 822A and/or 822B. In some embodiments, each operation described can occur based on electrical power provided by the power system 842A and/or 842B.

In some embodiments, the peripherals interface 822A can include one or more devices configured to be part of the computing system 820, many of which have been defined above and/or described with respect to wrist-wearable devices shown in Figures 7A and 7B. For example, the peripherals interface can include one or more sensors 823A. Some example sensors include one or more coupling sensors 824, one or more acoustic sensors 825, one or more imaging sensors 826, one or more EMG sensors 827, one or more capacitive sensors 828, and/or one or more IMUs 829. In some embodiments, the sensors 823A further include depth sensors 867, light sensors 868, and/or any other types of sensors defined above or described with respect to any other embodiments discussed herein.

In some embodiments, the peripherals interface can include one or more additional peripheral devices, including one or more NFC devices 830, one or more GPS devices 831, one or more LTE devices 832, one or more Wi-Fi and/or Bluetooth devices 833, one or more buttons 834 (e.g., including buttons that are slidable or otherwise adjustable), one or more displays 835A, one or more speakers 836A, one or more microphones 837A, one or more cameras 838A (e.g., including the first camera 839-1 through nth camera 839-n, which are analogous to the left camera 839A and/or the right camera 839B), one or more haptic devices 840, and/or any other types of peripheral devices defined above or described with respect to any other embodiments discussed herein.

The head-wearable devices can include a variety of types of visual feedback mechanisms (e.g., presentation devices). For example, display devices in the AR device 800 and/or the VR device 810 can include one or more liquid-crystal displays (LCDs), light emitting diode (LED) displays, organic LED (OLED) displays, micro-LEDs, and/or any other suitable types of display screens. The head-wearable devices can include a single display screen (e.g., configured to be seen by both eyes) and/or can provide separate display screens for each eye, which can allow for additional flexibility for varifocal adjustments and/or for correcting a refractive error associated with the user's vision. Some embodiments of the head-wearable devices also include optical subsystems having one or more lenses (e.g., conventional concave or convex lenses, Fresnel lenses, or adjustable liquid lenses) through which a user can view a display screen. For example, respective displays 835A can be coupled to each of the lenses 806-1 and 806-2 of the AR device 800. The displays 835A coupled to each of the lenses 806-1 and 806-2 can act together or independently to present an image or series of images to a user. In some embodiments, the AR device 800 and/or the VR device 810 includes a single display 835A (e.g., a near-eye display) or more than two displays 835A.

In some embodiments, a first set of one or more displays 835A can be used to present an augmented-reality environment, and a second set of one or more display devices 835A can be used to present a VR environment. In some embodiments, one or more waveguides are used in conjunction with presenting AR content to the user of the AR device 800 and/or the VR device 810 (e.g., as a means of delivering light from a display projector assembly and/or one or more displays 835A to the user's eyes). In some embodiments, one or more waveguides are fully or partially integrated into the AR device 800 and/or the VR device 810. Additionally, or alternatively, to display screens, some AR systems include one or more projection systems. For example, display devices in the AR device 800 and/or the VR device 810 can include micro-LED projectors that project light (e.g., using a waveguide) into display devices, such as clear combiner lenses that allow ambient light to pass through. The display devices can refract the projected light toward a user's pupil and can enable a user to simultaneously view both AR content and the real world. The head-wearable devices can also be configured with any other suitable type or form of image projection system. In some embodiments, one or more waveguides are provided, additionally or alternatively, to the one or more display(s) 835A.

In some embodiments of the head-wearable devices, ambient light and/or a real-world live view (e.g., a live feed of the surrounding environment that a user would normally see) can be passed through a display element of a respective head-wearable device presenting aspects of the AR system. In some embodiments, ambient light and/or the real-world live view can be passed through a portion, less than all, of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable devices, and an amount of ambient light and/or the real-world live view (e.g., 15%-50% of the ambient light and/or the real-world live view) can be passed through the user interface element, such that the user can distinguish at least a portion of the physical environment over which the user interface element is being displayed.

The head-wearable devices can include one or more external displays 835A for presenting information to users. For example, an external display 835A can be used to show a current battery level, network activity (e.g., connected, disconnected), current activity (e.g., playing a game, in a call, in a meeting, or watching a movie), and/or other relevant information. In some embodiments, the external displays 835A can be used to communicate with others. For example, a user of the head-wearable device can cause the external displays 835A to present a "do not disturb" notification. The external displays 835A can also be used by the user to share any information captured by the one or more components of the peripherals interface 822A and/or generated by the head-wearable device (e.g., during operation and/or performance of one or more applications).

The memory 850A can include instructions and/or data executable by one or more processors 848A (and/or processors 848B of the housing 890) and/or a memory controller of the one or more controllers 846A (and/or controller 846B of the housing 890). The memory 850A can include one or more operating systems 851, one or more applications 852, one or more communication interface modules 853A, one or more graphics modules 854A, one or more AR processing modules 855A, an adaptive bit rate (ADR) processing module 856A configured to processes the data transmission characteristics (e.g., RSSI/latency) received from the first device to determine what the transmission bit rate needs to be for an optimal video data transmission, and/or any other types of modules or components defined above or described with respect to any other embodiments discussed herein.

The data 860 stored in memory 850A can be used in conjunction with one or more of the applications and/or programs discussed above. The data 860 can include profile data 861, sensor data 862, media content data 863, AR application data 864, ADR Data 865 including transmission characteristics received from the first device and bit rate data determined following the processing of the transmission characteristics; and/or any other types of data defined above or described with respect to any other embodiments discussed herein.

In some embodiments, the controller 846A of the head-wearable devices processes information generated by the sensors 823A on the head-wearable devices and/or another component of the head-wearable devices and/or communicatively coupled with the head-wearable devices (e.g., components of the housing 890, such as components of peripherals interface 822B). For example, the controller 846A can process information from the acoustic sensors 825 and/or image sensors 826. For each detected sound, the controller 846A can perform a direction of arrival (DOA) estimation to estimate a direction from which the detected sound arrived at a head-wearable device. As one or more of the acoustic sensors 825 detect sounds, the controller 846A can populate an audio data set with the information (e.g., represented by sensor data 862).

In some embodiments, a physical electronic connector can convey information between the head-wearable devices and another electronic device, and/or between one or more processors 848A of the head-wearable devices and the controller 846A. The information can be in the form of optical data, electrical data, wireless data, or any other transmittable data form. Moving the processing of information generated by the head-wearable devices to an intermediary processing device can reduce weight and heat in the eyewear device, making it more comfortable and safer for a user. In some embodiments, an optional accessory device (e.g., an electronic neckband or an HIPD 900) is coupled to the head-wearable devices via one or more connectors. The connectors can be wired or wireless connectors and can include electrical and/or non-electrical (e.g., structural) components. In some embodiments, the head-wearable devices and the accessory device can operate independently without any wired or wireless connection between them.

The head-wearable devices can include various types of computer vision components and subsystems. For example, the AR device 800 and/or the VR device 810 can include one or more optical sensors such as two-dimensional (2D) or three-dimensional (3D) cameras, ToF depth sensors, single-beam or sweeping laser rangefinders, 3D LiDAR sensors, and/or any other suitable type or form of optical sensor. A head-wearable device can process data from one or more of these sensors to identify a location of a user and/or aspects of the user's real-world physical surroundings, including the locations of real-world objects within the real-world physical surroundings. In some embodiments, the methods described herein are used to map the real world, to provide a user with context about real-world surroundings, and/or to generate interactable virtual objects (which can be replicas or digital twins of real-world objects that can be interacted with an AR environment), among a variety of other functions. For example, Figures 8B-1 and 8B-2 show the VR device 810 having cameras 839A-839D, which can be used to provide depth information for creating a voxel field and a 2D mesh to provide object information to the user to avoid collisions.

The optional housing 890 can include analogous components to those describe above with respect to the computing system 820. For example, the optional housing 890 can include a respective peripherals interface 822B, including more or fewer components to those described above with respect to the peripherals interface 822A. As described above, the components of the optional housing 890 can be used to augment and/or expand on the functionality of the head-wearable devices. For example, the optional housing 890 can include respective sensors 823B, speakers 836B, displays 835B, microphones 837B, cameras 838B, and/or other components to capture and/or present data. Similarly, the optional housing 890 can include one or more processors 848B, controllers 846B, and/or memory 850B (including respective communication interface modules 853B, one or more graphics modules 854B, one or more AR processing modules 855B) that can be used individually and/or in conjunction with the components of the computing system 820.

The techniques described above in Figures 8A-8C can be used with different head-wearable devices. In some embodiments, the head-wearable devices (e.g., the AR device 800 and/or the VR device 810) can be used in conjunction with one or more wearable devices such as a wrist-wearable device 700 (or components thereof). Having thus described example the head-wearable devices, attention will now be turned to example handheld intermediary processing devices, such as HIPD 900.

### Example Handheld Intermediary Processing Devices

Figures 9A and 9B illustrate an example handheld intermediary processing device (HIPD) 900, in accordance with some embodiments. The HIPD 900 is an instance of the first device described in reference to Figures 1-5 herein, such that the HIPD 900 should be understood to have the features described with respect to any intermediary device defined above or otherwise described herein, and vice versa. The HIPD 900 can perform various functions and/or operations associated with navigating through user interfaces and selectively opening applications, as well as the functions and/or operations described above with reference to the first device in Figures 1-5.

Figure 9A shows a top view 905 and a side view 925 of the HIPD 900. The HIPD 900 is configured to communicatively couple with one or more wearable devices (or other electronic devices) associated with a user. For example, the HIPD 900 is configured to communicatively couple with a user's wrist-wearable device 700 (or components thereof, such as the watch body 720 and the wearable band 710), AR device 800, and/or VR device 810. The HIPD 900 can be configured to be held by a user (e.g., as a handheld controller), carried on the user's person (e.g., in their pocket or in their bag), placed in proximity of the user (e.g., placed on their desk while seated at their desk or on a charging dock), and/or placed at or within a predetermined distance from a wearable device or other electronic device (e.g., where, in some embodiments, the predetermined distance is the maximum distance (e.g., 10 meters) at which the HIPD 900 can successfully be communicatively coupled with an electronic device, such as a wearable device).

The HIPD 900 can perform various functions independently and/or in conjunction with one or more wearable devices (e.g., wrist-wearable device 700, AR device 800, and/or VR device 810). The HIPD 900 is configured to increase and/or improve the functionality of communicatively coupled devices, such as the wearable devices. The HIPD 900 is configured to perform one or more functions or operations associated with interacting with user interfaces and applications of communicatively coupled devices, interacting with an AR environment, interacting with a VR environment, and/or operating as a human-machine interface controller, as well as functions and/or operations described above with reference to Figures 1-5. Additionally, as will be described in more detail below, functionality and/or operations of the HIPD 900 can include, without limitation, task offloading and/or handoffs, thermals offloading and/or handoffs, 6 degrees of freedom (6DoF) raycasting and/or gaming (e.g., using imaging devices or cameras 914A and 914B, which can be used for simultaneous localization and mapping (SLAM), and/or with other image processing techniques), portable charging; messaging, image capturing via one or more imaging devices or cameras (e.g., cameras 922A and 922B), sensing user input (e.g., sensing a touch on a multitouch input surface 902), wireless communications and/or interlining (e.g., cellular, near field, Wi-Fi, or personal area network), location determination, financial transactions, providing haptic feedback, alarms, notifications, biometric authentication, health monitoring, sleep monitoring. The above-example functions can be executed independently in the HIPD 900 and/or in communication between the HIPD 900 and another wearable device described herein. In some embodiments, functions can be executed on the HIPD 900 in conjunction with an AR environment. As the skilled artisan will appreciate upon reading the descriptions provided herein, the novel HIPD 900 described herein can be used with any type of suitable AR environment.

While the HIPD 900 is communicatively coupled with a wearable device and/or other electronic device, the HIPD 900 is configured to perform one or more operations initiated at the wearable device and/or the other electronic device. In particular, one or more operations of the wearable device and/or the other electronic device can be offloaded to the HIPD 900 to be performed. The HIPD 900 performs one or more operations of the wearable device and/or the other electronic device and provides data corresponding to the completed operations to the wearable device and/or the other electronic device. For example, a user can initiate a video stream using the AR device 800 and back-end tasks associated with performing the video stream (e.g., video rendering) can be offloaded to the HIPD 900, which the HIPD 900 performs and provides corresponding data to the AR device 800 to perform remaining front-end tasks associated with the video stream (e.g., presenting the rendered video data via a display of the AR device 800). In this way, the HIPD 900, which has more computational resources and greater thermal headroom than a wearable device can perform computationally intensive tasks for the wearable device, improving performance of an operation performed by the wearable device.

The HIPD 900 includes a multi-touch input surface 902 on a first side (e.g., a front surface) that is configured to detect one or more user inputs. In particular, the multi-touch input surface 902 can detect single-tap inputs, multi-tap inputs, swipe gestures and/or inputs, force-based and/or pressure-based touch inputs, held taps, and the like. The multi-touch input surface 902 is configured to detect capacitive touch inputs and/or force (and/or pressure) touch inputs. The multi-touch input surface 902 includes a first touch-input surface 904 defined by a surface depression, and a second touch-input surface 906 defined by a substantially planar portion. The first touch-input surface 904 can be disposed adjacent to the second touch-input surface 906. In some embodiments, the first touch-input surface 904 and the second touch-input surface 906 can be different dimensions, shapes, and/or cover different portions of the multi-touch input surface 902. For example, the first touch-input surface 904 can be substantially circular and the second touch-input surface 906 is substantially rectangular. In some embodiments, the surface depression of the multi-touch input surface 902 is configured to guide user handling of the HIPD 900. In particular, the surface depression is configured such that the user holds the HIPD 900 upright when held in a single hand (e.g., such that the using imaging devices or cameras 914A and 914B are pointed toward a ceiling or the sky). Additionally, the surface depression is configured such that the user's thumb rests within the first touch-input surface 904.

In some embodiments, the different touch-input surfaces include a plurality of touch-input zones. For example, the second touch-input surface 906 includes at least a first touch-input zone 908 within a second touch-input zone 906 and a third touch-input zone 910 within the first touch-input zone 908. In some embodiments, one or more of the touch-input zones are optional and/or user defined (e.g., a user can specific a touch-input zone based on their preferences). In some embodiments, each touch-input surface and/or touch-input zone is associated with a predetermined set of commands. For example, a user input detected within the first touch-input zone 908 causes the HIPD 900 to perform a first command and a user input detected within the second touch-input zone 906 causes the HIPD 900 to perform a second command, distinct from the first. In some embodiments, different touch-input surfaces and/or touch-input zones are configured to detect one or more types of user inputs. The different touch-input surfaces and/or touch-input zones can be configured to detect the same or distinct types of user inputs. For example, the first touch-input zone 908 can be configured to detect force touch inputs (e.g., a magnitude at which the user presses down) and capacitive touch inputs, and the second touch-input zone 906 can be configured to detect capacitive touch inputs.

The HIPD 900 includes one or more sensors 951 for sensing data used in the performance of one or more operations and/or functions. For example, the HIPD 900 can include an IMU that is used in conjunction with cameras 914 for 3-dimensional object manipulation (e.g., enlarging, moving, destroying, etc. an object) in an AR or VR environment. Non-limiting examples of the sensors 951 included in the HIPD 900 include a light sensor, a magnetometer, a depth sensor, a pressure sensor, and a force sensor. Additional examples of the sensors 951 are provided below in reference to Figure 9B.

The HIPD 900 can include one or more light indicators 912 to provide one or more notifications to the user. In some embodiments, the light indicators are LEDs or other types of illumination devices. The light indicators 912 can operate as a privacy light to notify the user and/or others near the user that an imaging device and/or microphone are active. In some embodiments, a light indicator is positioned adjacent to one or more touch-input surfaces. For example, a light indicator can be positioned around the first touch-input surface 904. The light indicators can be illuminated in different colors and/or patterns to provide the user with one or more notifications and/or information about the device. For example, a light indicator positioned around the first touch-input surface 904 can flash when the user receives a notification (e.g., a message), change red when the HIPD 900 is out of power, operate as a progress bar (e.g., a light ring that is closed when a task is completed (e.g., 0% to 100%)), operates as a volume indicator, etc.).

In some embodiments, the HIPD 900 includes one or more additional sensors on another surface. For example, as shown Figure 9A, HIPD 900 includes a set of one or more sensors (e.g., sensor set 920) on an edge of the HIPD 900. The sensor set 920, when positioned on an edge of the of the HIPD 900, can be pe positioned at a predetermined tilt angle (e.g., 26 degrees), which allows the sensor set 920 to be angled toward the user when placed on a desk or other flat surface. Alternatively, in some embodiments, the sensor set 920 is positioned on a surface opposite the multi-touch input surface 902 (e.g., a back surface). The one or more sensors of the sensor set 920 are discussed in detail below.

The side view 925 of the of the HIPD 900 shows the sensor set 920 and camera 914B. The sensor set 920 includes one or more cameras 922A and 922B, a depth projector 924, an ambient light sensor 928, and a depth receiver 930. In some embodiments, the sensor set 920 includes a light indicator 926. The light indicator 926 can operate as a privacy indicator to let the user and/or those around them know that a camera and/or microphone is active. The sensor set 920 is configured to capture a user's facial expression such that the user can puppet a custom avatar (e.g., showing emotions, such as smiles, laughter, etc., on the avatar or a digital representation of the user). The sensor set 920 can be configured as a side stereo red-green-blue (RGB) system, a rear indirect time-of-flight (iToF) system, or a rear stereo RGB system. As the skilled artisan will appreciate upon reading the descriptions provided herein, the novel HIPD 900 described herein can use different sensor set 920 configurations and/or sensor set 920 placement.

In some embodiments, the HIPD 900 includes one or more haptic devices 971 (Figure 9B; e.g., a vibratory haptic actuator) that are configured to provide haptic feedback (e.g., kinesthetic sensation). The sensors 951, and/or the haptic devices 971 can be configured to operate in conjunction with multiple applications and/or communicatively coupled devices including, without limitation, a wearable devices, health monitoring applications, social media applications, game applications, and artificial reality applications (e.g., the applications associated with artificial reality).

The HIPD 900 is configured to operate without a display. However, in optional embodiments, the HIPD 900 can include a display 968 (Figure 9B). The HIPD 900 can also income one or more optional peripheral buttons 967 (Figure 9B). For example, the peripheral buttons 967 can be used to turn on or turn off the HIPD 900. Further, the HIPD 900 housing can be formed of polymers and/or elastomer elastomers. The HIPD 900 can be configured to have a non-slip surface to allow the HIPD 900 to be placed on a surface without requiring a user to watch over the HIPD 900. In other words, the HIPD 900 is designed such that it would not easily slide off a surfaces. In some embodiments, the HIPD 900 include one or magnets to couple the HIPD 900 to another surface. This allows the user to mount the HIPD 900 to different surfaces and provide the user with greater flexibility in use of the HIPD 900.

As described above, the HIPD 900 can distribute and/or provide instructions for performing the one or more tasks at the HIPD 900 and/or a communicatively coupled device. For example, the HIPD 900 can identify one or more back-end tasks to be performed by the HIPD 900 and one or more front-end tasks to be performed by a communicatively coupled device. While the HIPD 900 is configured to offload and/or handoff tasks of a communicatively coupled device, the HIPD 900 can perform both back-end and front-end tasks (e.g., via one or more processors, such as CPU 977; Figure 9B). The HIPD 900 can, without limitation, can be used to perform augmenting calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. The HIPD 900 can perform the above operations alone or in conjunction with a wearable device (or other communicatively coupled electronic device).

Figure 9B shows block diagrams of a computing system 940 of the HIPD 900, in accordance with some embodiments. The HIPD 900, described in detail above, can include one or more components shown in HIPD computing system 940. The HIPD 900 will be understood to include the components shown and described below for the HIPD computing system 940. In some embodiments, all, or a substantial portion of the components of the HIPD computing system 940 are included in a single integrated circuit. Alternatively, in some embodiments, components of the HIPD computing system 940 are included in a plurality of integrated circuits that are communicatively coupled.

The HIPD computing system 940 can include a processor (e.g., a CPU 977, a GPU, and/or a CPU with integrated graphics), a controller 975, a peripherals interface 950 that includes one or more sensors 951 and other peripheral devices, a power source (e.g., a power system 995), and memory (e.g., a memory 978) that includes an operating system (e.g., an operating system 979), data (e.g., data 988), one or more applications (e.g., applications 980), and one or more modules (e.g., a communications interface module 981, a graphics module 982, a task and processing management module 983, an interoperability module 984, an AR processing module 985, a data management module 986, an ADR processing module 987, etc.). The HIPD computing system 940 further includes a power system 995 that includes a charger input and output 996, a PMIC 997, and a battery 998, all of which are defined above.

In some embodiments, the peripherals interface 950 can include one or more sensors 951. The sensors 951 can include analogous sensors to those described above in reference to Figures 7B. For example, the sensors 951 can include imaging sensors 954, (optional) EMG sensors 956, IMUs 958, and capacitive sensors 960. In some embodiments, the sensors 951 can include one or more pressure sensor 952 for sensing pressure data, an altimeter 953 for sensing an altitude of the HIPD 900, a magnetometer 955 for sensing a magnetic field, a depth sensor 957 (or a time-of flight sensor) for determining a difference between the camera and the subject of an image, a position sensor 959 (e.g., a flexible position sensor) for sensing a relative displacement or position change of a portion of the HIPD 900, a force sensor 961 for sensing a force applied to a portion of the HIPD 900, and a light sensor 962 (e.g., an ambient light sensor) for detecting an amount of lighting. The sensors 951 can include one or more sensors not shown in Figure 9B.

Analogous to the peripherals described above in reference to Figures 7B, the peripherals interface 950 can also include an NFC component 963, a GPS component 964, an LTE component 965, a Wi-Fi and/or Bluetooth communication component 966, a speaker 969, a haptic device 971, and a microphone 973. As described above in reference to Figure 9A, the HIPD 900 can optionally include a display 968 and/or one or more buttons 967. The peripherals interface 950 can further include one or more cameras 970, touch surfaces 972, and/or one or more light emitters 974. The multi-touch input surface 902 described above in reference to Figure 9A is an example of touch surface 972. The light emitters 974 can be one or more LEDs, lasers, etc. and can be used to project or present information to a user. For example, the light emitters 974 can include light indicators 912 and 926 described above in reference to Figure 9A. The cameras 970 (e.g., cameras 914A, 914B, and 922 described above in Figure 9A) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other available cameras. Cameras 970 can be used for SLAM; 6 DoF ray casting, gaming, object manipulation, and/or other rendering; facial recognition and facial expression recognition, etc.

Similar to the watch body computing system 760 and the watch band computing system 730 described above in reference to Figure 7B, the HIPD computing system 940 can include one or more haptic controllers 976 and associated componentry (e.g., haptic devices 971) for providing haptic events at the HIPD 900.

Memory 978 can include high-speed random-access memory and/or non-volatile memory, such as one or more magnetic disk storage devices, flash memory devices, or other non-volatile solid-state memory devices. Access to the memory 978 by other components of the HIPD 900, such as the one or more processors and the peripherals interface 950, can be controlled by a memory controller of the controllers 975.

In some embodiments, software components stored in the memory 978 include one or more operating systems 979, one or more applications 980, one or more communication interface modules 981, one or more graphics modules 982, one or more data management modules 985, which are analogous to the software components described above in reference to Figure 7B. The software components stored in the memory 978 can also include an ADR processing module 987, which is configured to perform the features described above in reference to Figures 1-5.

In some embodiments, software components stored in the memory 978 include a task and processing management module 983 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some embodiments, the task and processing management module 983 uses data 988 (e.g., device data 990) to distribute the one or more front-end and/or back-end tasks based on communicatively coupled devices' computing resources, available power, thermal headroom, ongoing operations, and/or other factors. For example, the task and processing management module 983 can cause the performance of one or more back-end tasks (of an operation performed at communicatively coupled AR device 800) at the HIPD 900 in accordance with a determination that the operation is utilizing a predetermined amount (e.g., at least 70%) of computing resources available at the AR device 800.

In some embodiments, software components stored in the memory 978 include an interoperability module 984 for exchanging and utilizing information received and/or provided to distinct communicatively coupled devices. The interoperability module 984 allows for different systems, devices, and/or applications to connect and communicate in a coordinated way without user input. In some embodiments, software components stored in the memory 978 include an AR module 985 that is configured to process signals based at least on sensor data for use in an AR and/or VR environment. For example, the AR processing module 985 can be used for 3D object manipulation, gesture recognition, facial and facial expression, recognition, etc.

The memory 978 can also include data 988, including structured data. In some embodiments, the data 988 can include profile data 989, device data 989 (including device data of one or more devices communicatively coupled with the HIPD 900, such as device type, hardware, software, configurations, etc.), sensor data 991, media content data 992, application data 993, and ADR data 994, which stores data related to the performance of the features described above in reference to Figures 1-5].

It should be appreciated that the HIPD computing system 940 is an example of a computing system within the HIPD 900, and that the HIPD 900 can have more or fewer components than shown in the HIPD computing system 940, combine two or more components, and/or have a different configuration and/or arrangement of the components. The various components shown in HIPD computing system 940 are implemented in hardware, software, firmware, or a combination thereof, including one or more signal processing and/or application-specific integrated circuits.

The techniques described above in Figure 9A-9B can be used with any device used as a human-machine interface controller. In some embodiments, an HIPD 900 can be used in conjunction with one or more wearable device such as a head-wearable device (e.g., AR device 800 and VR device 810) and/or a wrist-wearable device 700 (or components thereof).

Any data collection performed by the devices described herein and/or any devices configured to perform or cause the performance of the different embodiments described above in reference to any of the Figures, hereinafter the "devices," is done with user consent and in a manner that is consistent with all applicable privacy laws. Users are given options to allow the devices to collect data, as well as the option to limit or deny collection of data by the devices. A user is able to opt in or opt out of any data collection at any time. Further, users are given the option to request the removal of any collected data.

It will be understood that, although the terms "first," "second," etc., may be used herein to describe various elements, these elements should not be limited by these terms. These terms are only used to distinguish one element from another.

The terminology used herein is for the purpose of describing particular embodiments only and is not intended to be limiting of the claims. As used in the description of the embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' can be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" can be construed to mean "upon determining" or "in response to determining" or "in accordance with a determination" or "upon detecting" or "in response to detecting" that the stated condition precedent is true, depending on the context.

The foregoing description, for purpose of explanation, has been described with reference to specific embodiments. However, the illustrative discussions above are not intended to be exhaustive or to limit the claims to the precise forms disclosed. Many modifications and variations are possible in view of the above teachings. The embodiments were chosen and described in order to best explain principles of operation and practical applications, to thereby enable others skilled in the art.

## Claims

1. A method of adjusting a bit rate of data being transferred, comprising:
while a user is wearing glasses communicatively coupled to a first device via a first narrow bandwidth communication channel:
in conjunction with capturing video data using a camera at the glasses and in response to receiving a request from the user of the glasses to stream the video data at the first device, receiving data used to assess a data transmission characteristic of the first narrow bandwidth communication channel;
in accordance with a determination that the data transmission characteristic satisfies a first threshold, causing the video data to be sent via the first communication channel at a first bitrate, wherein as the video data is received at the first device, the first device is configured to stream the video data to another device associated with another user;
in conjunction with capturing additional video data using the camera at the glasses, receiving new data used to assess a new data transmission characteristic of the first narrow bandwidth communication channel; and
in accordance with a determination that the new data transmission characteristic satisfies a second threshold, causing the additional video data to be sent via the first communication channel at a second bitrate, distinct from the first bitrate.

2. The method of claim 1, wherein:
the data used to assess the data transmission characteristic is a frame rate of the video data sent via the first communication channel; and
the new data used to assess the new data transmission characteristic is a frame rate of the additional video data sent via the first communication channel;
optionally wherein:
(i) the frame rate of the video data sent via the first communication channel is greater than the frame rate of the additional video data sent via the first communication channel; and the first bitrate is greater than the second bitrate; or
(ii) the frame rate of the video data sent via the first communication channel is less than the frame rate of the additional video data sent via the first communication channel; and the first bitrate is less than the second bitrate.

3. The method of claim 1, and one or more of the following:
(i) wherein capturing the video data further includes capturing audio data using a microphone at the glasses;
(ii) wherein the narrow bandwidth communication channel is a Bluetooth channel;
(iii) wherein the data and the new data include at least one of: received signal strength indicator (RSSI) data and latency data associated with the first device;
(iv) wherein the first device is further configured to save the video data to memory at the first device.

4. The method of any preceding claim, further comprising:
while the user is wearing the glasses communicatively coupled to the first device via the first narrow bandwidth communication channel:
in conjunction with capturing other video data using the camera at the glasses, receiving other data used to assess another data transmission characteristic of the first narrow bandwidth communication channel;
in accordance with a determination that the other data transmission characteristic satisfies a third threshold, causing the other video data to be sent via the first communication channel at a third bitrate, distinct from the first bitrate and second bitrate.

5. The method of any preceding claim, further comprising:
while the user is wearing the glasses communicatively coupled to the first device via a first narrow bandwidth communication channel and prior to sending the video data via the first communication channel to the first device, compressing and encoding the video data.

6. The method of any preceding claim, further comprising:
while the user is wearing the glasses communicatively coupled to the first device via the first narrow bandwidth communication channel:
in response to capturing the video data using the camera at the glasses, display the video data at a display of the first device; and
in response to capturing the additional video data using the camera at the glasses, display the additional video at the display of the first device.

7. The method of any preceding claim, further comprising:
while the user is wearing the glasses communicatively coupled to the first device via the first narrow bandwidth communication channel:
in response to receiving a message from the other device associated with the other user, present the message at one of glasses and the first device.

8. The method of any preceding claim, wherein the glasses are one of augmented-reality glasses with at least one display and smart glasses without a display.

9. An electronic device comprising:
one or more processors; and
memory including instructions that, when executed by the one or more processors, cause the electronic device to:
while a user is wearing glasses communicatively coupled to the electronic device via a first narrow bandwidth communication channel:
in conjunction with causing a camera at the glasses to capture video data and in response to receiving a request from the user of the glasses to stream the video data at the electronic device, receive data used to assess a data transmission characteristic of the first narrow bandwidth communication channel;
in accordance with a determination that the data transmission characteristic satisfies a first threshold, cause the video data to be sent via the first communication channel at a first bitrate, wherein as the video data is received at the electronic device, the electronic device streams the video data to another device associated with another user;
in conjunction with capturing additional video data using the camera at the glasses, receive new data used to assess a new data transmission characteristic of the first narrow bandwidth communication channel; and
in accordance with a determination that the new data transmission characteristic satisfies a second threshold, cause the additional video data to be sent via the first communication channel at a second bitrate, distinct from the first bitrate.

10. The electronic device of claim 9, wherein:
the data used to assess the data transmission characteristic is a frame rate of the video data sent via the first communication channel; and
the new data used to assess the new data transmission characteristic is a frame rate of the additional video data sent via the first communication channel.

11. The electronic device of claim 9 or claim 10, wherein the instructions that, when executed by the one or more processors, further cause the electronic device to:
while the user is wearing the glasses communicatively coupled to the electronic device via the first narrow bandwidth communication channel:
in conjunction with capturing other video data using the camera at the glasses, receive other data used to assess another data transmission characteristic of the first narrow bandwidth communication channel;
in accordance with a determination that the other data transmission characteristic satisfies a third threshold, cause the other video data to be sent via the first communication channel at a third bitrate, distinct from the first bitrate and second bitrate.

12. The electronic device of any one of claims 9 to 11, wherein the glasses are one of augmented-reality glasses with at least one display and smart glasses without a display.

13. A non-transitory computer readable storage medium including instructions that, when executed by one or more processors, cause the one or more processors to:
while a user is wearing glasses communicatively coupled to a first device via a first narrow bandwidth communication channel:
in conjunction with causing a camera at the glasses to capture video data and in response to receiving a request from the user of the glasses to stream the video data at the first device, cause the first device to receive data used to assess a data transmission characteristic of the first narrow bandwidth communication channel;
in accordance with a determination that the data transmission characteristic satisfies a first threshold, cause the video data to be sent via the first communication channel at a first bitrate, wherein as the video data is received at the first device, the first device is configured to stream the video data to another device associated with another user;
in conjunction with capturing additional video data using the camera at the glasses, cause the first device to receive new data used to assess a new data transmission characteristic of the first narrow bandwidth communication channel; and
in accordance with a determination that the new data transmission characteristic satisfies a second threshold, cause the additional video data to be sent via the first communication channel at a second bitrate, distinct from the first bitrate.

14. The non-transitory computer readable storage medium of claim 13, wherein the instructions that, when executed by the one or more processors, further cause the one or more processors to:
while the user is wearing the glasses communicatively coupled to the first device via the first narrow bandwidth communication channel:
in conjunction with capturing other video data using the camera at the glasses, cause the first device to receive other data used to assess another data transmission characteristic of the first narrow bandwidth communication channel;
in accordance with a determination that the other data transmission characteristic satisfies a third threshold, cause the other video data to be sent via the first communication channel at a third bitrate, distinct from the first bitrate and second bitrate.

15. The non-transitory computer readable storage medium of claim 13 or claim 14, wherein the glasses are one of augmented-reality glasses with at least one display and smart glasses without a display.
